(19) Europäisches Patentamt
European Patent Office
Office européen des brevets

(11) EP 4 632 038 A1

(12) **EUROPEAN PATENT APPLICATION**
published in accordance with Art. 153(4) EPC

(43) Date of publication:
**15.10.2025 Bulletin 2025/42**

(21) Application number: **23899685.4**

(22) Date of filing: **07.11.2023**

(51) International Patent Classification (IPC):
***C09K 19/42*** *(2006.01)* ***C09K 19/44*** *(2006.01)*
***G02F 1/13*** *(2006.01)* ***C09K 19/04*** *(2006.01)*
***C09K 19/00*** *(2006.01)*

(52) Cooperative Patent Classification (CPC):
**C09K 19/00; C09K 19/04; C09K 19/30; C09K 19/34; C09K 19/42; C09K 19/44; G02F 1/13; G02F 1/1333**

(86) International application number:
**PCT/CN2023/130203**

(87) International publication number:
**WO 2024/120104 (13.06.2024 Gazette 2024/24)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **09.12.2022 CN 202211583693**

(71) Applicant: **Jiangsu Hecheng Display Technology Co., Ltd.**
**Nanjing, Jiangsu 210000 (CN)**

(72) Inventors:
- **HE, Di**
  **Nanjing, Jiangsu 210000 (CN)**
- **DING, Wenquan**
  **Nanjing, Jiangsu 210000 (CN)**
- **YANG, Yafei**
  **Nanjing, Jiangsu 210000 (CN)**
- **WANG, Panpan**
  **Nanjing, Jiangsu 210000 (CN)**
- **DAI, Huijuan**
  **Nanjing, Jiangsu 210000 (CN)**
- **YAO, Lifang**
  **Nanjing, Jiangsu 210000 (CN)**

(74) Representative: **Serjeants LLP**
**Dock**
**75 Exploration Drive**
**Leicester, LE4 5NU (GB)**

# (54) LIQUID CRYSTAL COMPOSITION AND LIQUID CRYSTAL DISPLAY DEVICE

(57) The present invention provides a liquid crystal composition and a liquid crystal display device. The liquid crystal composition comprises at least one compound of general formula I and at least one compound of general formula II. Via designing the components of the liquid crystal composition, the liquid crystal composition prepared in the present invention has a larger $K_{ave}$ value, a higher $\varepsilon_{\perp}$ and a lower LC scattering, and has an appropriate optical anisotropy and clearing point at the same time, which makes the liquid crystal display device containing the same have a better transmission and contrast rate, and suitable for display elements of VA, IPS or FFS type.

EP 4 632 038 A1

## Description

### Technical Field

The present invention belongs to the technical field of liquid crystal display technology, specifically relates to a liquid crystal composition and a liquid crystal display device.

### Background Arts

Liquid crystal display elements can be used in all kinds of domestic electrical apparatuses, measuring apparatuses, automotive panels, word processors, computers, printers, televisions and so forth, such as clocks and calculators. According to the types of display mode, it can be classified into PC (phase change), TN (twisted nematic), STN (super twisted nematic), ECB (electrically controlled birefringence), OCB (optically compensated bend), IPS (in-plane switching), VA (vertical alignment) and so forth. According to the driving ways of elements, it can be classified into PM (passive matrix) type and AM (active matrix) type. PM is classified into the static type, multiplex type and so forth. AM is classified into TFT (thin film transistor) type, MIM (metal insulator metal) type and so forth. The types of TFT comprise amorphous silicon and polycrystal silicon. The latter is classified into a high-temperature type and a low-temperature type according to the manufacturing process. According to the types of light source, liquid crystal display elements can be classified into a reflection type utilizing a natural light, a transmission type utilizing a backlight, and a semi-transmission type utilizing both the natural light and the backlight.

The optical anisotropy of the liquid crystal composition is associated with the contrast rate of the element. A large optical anisotropy or a small optical anisotropy is needed with the variation of the display mode of the element (that is, an appropriate optical anisotropy is needed). The product ($\Delta n \times d$) of the optical anisotropy ($\Delta n$) of the composition and the cell gap (d) is designed to maximize the contrast rate. An appropriate value of the product depends on the type of the work mode, and for an element with a small cell gap, liquid crystal composition having a large optical anisotropy is preferred.

The contrast rate is the rate between the brightest area and the darkest area of an image. The larger the rate, the more the gradations from black to white, and thereby the color performance is much more enriched. The impact of contrast rate on the visual effect is very critical. Generally speaking, the larger the contrast rate, the clearer and more eye-catching the image, and the more vibrant and gorgeous the colors; and a small contrast rate makes the whole picture become gray and dull. High contrast rate is of a great help for image clarity, detail performance, gray level performance. With a high contrast rate, the image effect is better, and the colors are more saturated, otherwise, with a low contrast rate, the picture is indistinct, and the color is less vibrant.

A liquid crystal display element having a liquid crystal composition with a large absolute value of the dielectric anisotropy reduces the base voltage value, reduces the driving voltage and further reduces electric power consumption.

A liquid crystal display element having a liquid crystal composition with a lower threshold voltage reduces display power dissipation effectively, in particular, in consumables (for example, portable electronic products such as mobile phones, tablet computers and the like), a longer battery life would be achieved. However, for liquid crystal compositions with lower threshold voltages (which typically include groups with large dielectric polarity), the degree of order of the liquid crystal molecules is low, the $K_{ave}$ value reflecting degree of order of the liquid crystal molecules reduces as well, and the light leakage and the contrast rate of the liquid crystal material are affected, these two are commonly difficult to balance.

Based on the light leakage performance test of traditional IPS-LCD, it is found by the person skilled in the art that the main causes of the light leakage issues of liquid crystal display device are as follows: LC scattering, rubbing uniformity, CF/TFT scattering, and polarize ability, wherein, LC scattering accounts for 63% of the factors affecting light leakage performance.

According to the following equation: LC scattering $\propto \dfrac{d \bullet \Delta n^2 \bullet (n_e + n_o)^2}{K_{ave}}$,

wherein, d represents the cell gap of the liquid crystal cell, $n_e$ represents the refractive index of extraordinary light, $n_o$ represents the refractive index of ordinary light.

In order to increase the LC scattering of the liquid crystal materials, increasing average elastic constant $K_{ave}$ (wherein, $K_{ave}=(K_{11}+K_{22}+K_{33})/3$) is needed to improve the LC scattering. In the situation of increasing the $K_{ave}$, the light leakage of the liquid crystal material can be decreased.

In addition, the relationship between the contrast rate (CR) and the luminance (L) is as follows:

$$CR=L_{255}/L_0\times 100\%;$$

wherein, $L_{255}$ is the on-state luminance, and $L_0$ is the off-state luminance. It can be seen that CR is significantly affected by the change of $L_0$. In the off state, $L_0$ has nothing to do with the dielectric performance of the liquid crystal molecule, but is related to the LC scattering of the liquid crystal material itself. The smaller the LC scattering, the smaller the $L_0$, and the CR is thereby significantly increased.

It can be seen from the contrast-scattering formula $\frac{d \bullet \Delta n^2 \bullet (n_e + n_o)^2}{K_{ave}}$ that, in order to realize an extremely high contrast rate, other than increasing $K_{ave}$ value (K value), reducing $\Delta n$ as much as possible is needed as well. Then with $\Delta n$ reduced, the transmission is partially lost. In order to offset the loss in the transmission, increasing the $\varepsilon_\perp$ (the dielectric constant perpendicular to the molecular axis) and K value to increase the transmission. Commonly, monomers with large K value have large $\Delta n$. Therefore, how to provide a liquid crystal composition having a larger K value and a smaller $\Delta n$ both and having a higher transmission has become an urgent technical problem to be solved at present.

## Summary of the Invention

Regarding the disadvantages in the prior art, it is an object of the present invention to provide a liquid crystal composition and a liquid crystal display device. Via designing the components of the liquid crystal composition, the liquid crystal composition prepared in the present invention has a larger $K_{ave}$ value, a higher $\varepsilon_\perp$ and a lower LC scattering, and has an appropriate optical anisotropy and clearing point at the same time, which is suitable for display elements of VA, IPS or FFS type.

To realize this object, the present invention adopts the following technical solutions:

In a first aspect, the present application provides a liquid crystal composition comprising at least one compound of general formula I and at least one compound of general formula II:

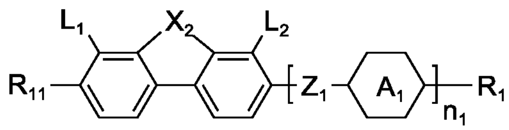

I;

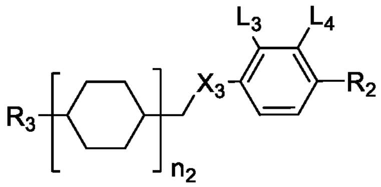

II,

wherein, $R_1$ represents any one of $C_{1-12}$ (for example, it can be $C_1$, $C_2$, $C_3$, $C_4$, $C_5$, $C_6$, $C_7$, $C_8$, $C_9$, $C_{10}$, $C_{11}$ or $C_{12}$) halogenated or unhalogenated linear alkyl, $C_{3-12}$ (for example, it can be $C_3$, $C_4$, $C_5$, $C_6$, $C_7$, $C_8$, $C_9$, $C_{10}$, $C_{11}$ or $C_{12}$) halogenated or unhalogenated branched alkyl,

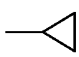, 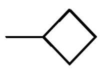 or 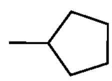;

wherein, one or at least two nonadjacent $-CH_2-$ group in the $C_{1-12}$ halogenated or unhalogenated linear alkyl and $C_{3-12}$ halogenated or unhalogenated branched alkyl can each be independently replaced by -CH=CH-, -C≡C-, -O-, -CO-, -CO-O- or -O-CO- group;

$R_{11}$ represents

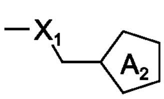 or 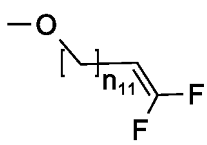,

$X_1$ represents -O- or -S-, $n_{11}$ represents 0, 1, 2, 3 or 4;

ring

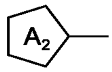

represents

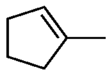, 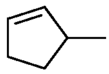 or 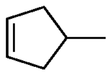;

$R_2$ and $R_3$ each independently represents any one of $C_{1-12}$ (for example, it can be $C_1$, $C_2$, $C_3$, $C_4$, $C_5$, $C_6$, $C_7$, $C_8$, $C_9$, $C_{10}$, $C_{11}$ or $C_{12}$) linear alkyl, $C_{3-12}$ (for example, it can be $C_3$, $C_4$, $C_5$, $C_6$, $C_7$, $C_8$, $C_9$, $C_{10}$, $C_{11}$ or $C_{12}$) branched alkyl,

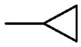, 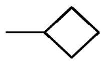

or

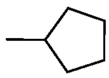;

wherein, one or at least two nonadjacent $-CH_2-$ group in the $C_{1-12}$ linear alkyl and $C_{3-12}$ branched alkyl can each be independently replaced by -CH=CH-, -C≡C-, -O-, -CO-, -CO-O- or -O-CO- group;
ring

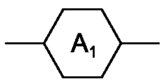

represents

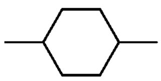, 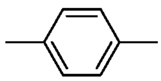 or 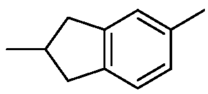,

wherein, one or at least two $-CH_2-$ in

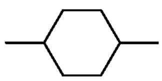 and 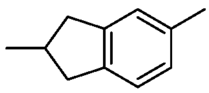

can each be independently replaced by -O-, one or at least two single bond in the rings can each be independently replaced by double bond; one or at least two -H on

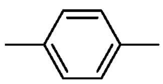

and

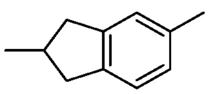

can each be independently replaced by -F, -Cl, -CN, $-CH_3$ or $-OCH_3$, one or at least two -CH= in the rings can each be

independently replaced by -N=;
$L_1$-$L_4$ each independently represents halogen atom;
$X_2$ represents -O- or -S-; $X_3$ represents -O- or $-CH_2-$;
$Z_1$ represents single bond, -CO-O-, -O-CO-, $-CH_20-$, $-OCH_2-$, -CH=CH-, -C≡C-, $-CH_2CH_2-$, $-CF_2CF_2-$, $-(CH_2)_4-$, $-CF_2O-$ or $-OCF_2-$;
$n_1$ represents 0, 1 or 2, when $n_1$ represents 2, ring

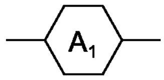

can be the same or different, $Z_1$ can be the same or different; and
$n_2$ represents 1 or 2.

In the present invention, via designing the components of the liquid crystal composition, the prepared liquid crystal composition has a larger $K_{ave}$ value, a higher $\varepsilon_\perp$ and a lower LC scattering, and has an appropriate optical anisotropy and clearing point at the same time, which is suitable for display elements of VA, IPS or FFS type.

The halogen atom includes fluorine atom, halogen atom, bromine atom and iodine atom (the same below).

The followings are preferred technical solutions of the present invention, but not used as limitations of the technical solutions provided in the present invention. The objections and beneficial effects of the present invention can be better achieved and realized via the following preferred technical solutions.

In some embodiments of the present invention, the compound of general formula I is any one or the combination of at least two of the compounds with the following structures:

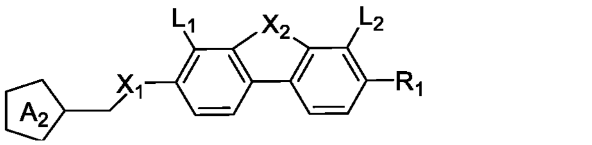
I-1;

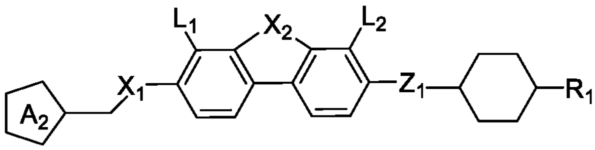
I-2;

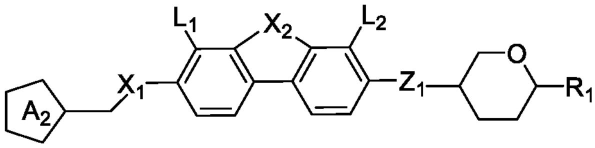
I-3;

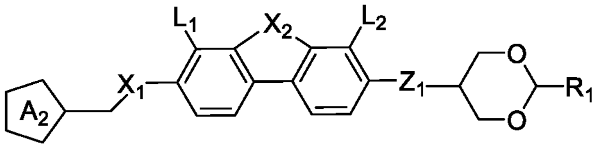
I-4;

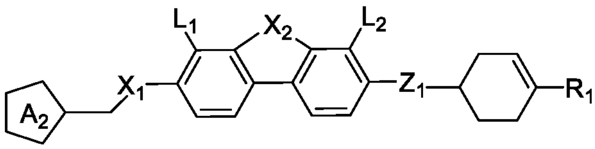
I-5;

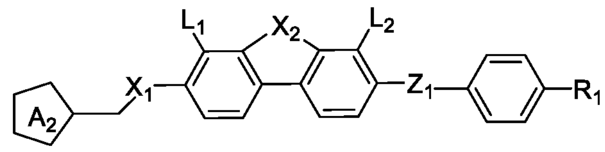

I-6;

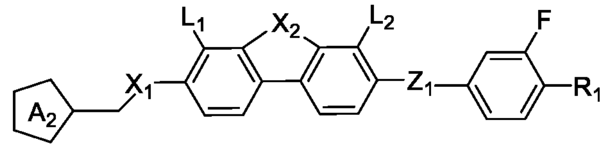

I-7;

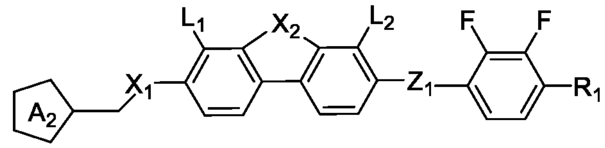

I-8;

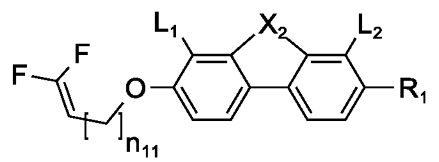

I-9;

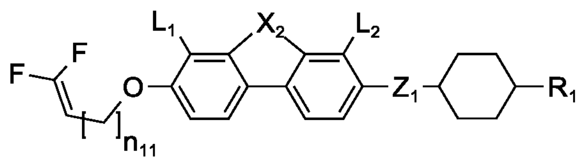

I-10;

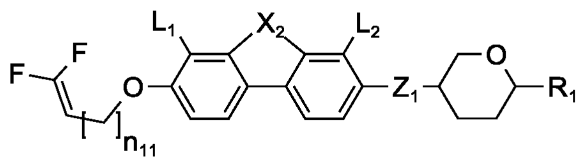

I-11;

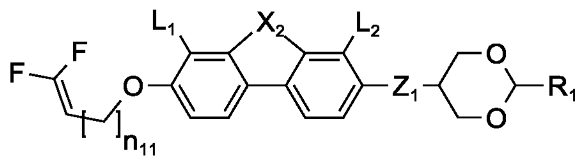

I-12;

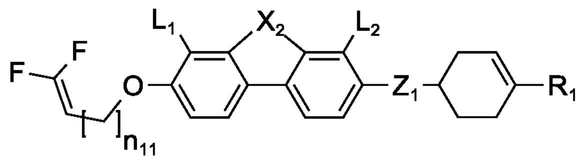

I-13;

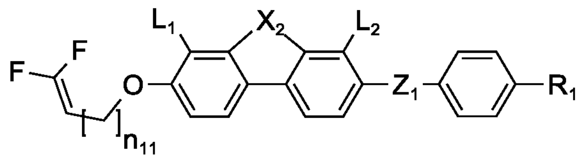

I-14;

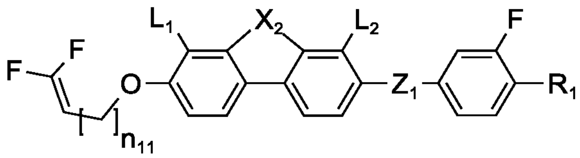

I-15;

and

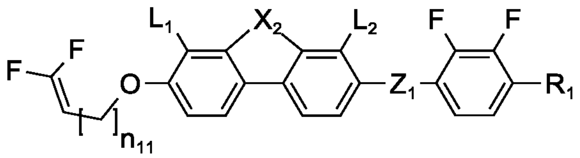

I-16,

wherein, ring

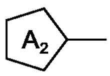

,

$X_1$, $X_2$, $L_1$, $L_2$, $Z_1$ and $n_{11}$ have the same protection scopes as aforesaid.

In some embodiments of the present invention, ring

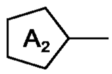

represents

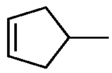

.

In some embodiments of the present invention, $L_1$ and $L_2$ both represent fluorine atom.

In some embodiments of the present invention, the compound of general formula I is the compound of general formula I-1 or the compound of general formula I-9.

In some embodiments of the present invention, the liquid crystal composition comprises at least two of the compound with the general formula I-1 and/or the compound of general formula I-9.

In some embodiments of the present invention, in the liquid crystal composition, percentage by weight of the compound of general formula I is 0.1%~35%, for example, it can be 0.1%, 0.2%, 0.5%, 1%, 2%, 4%, 6%, 8%, 10%, 12%, 14%, 16%, 18%, 20%, 22%, 25%, 26%, 28%, 30%, 32%, 35% or the like, further preferably, 2%~25%.

In some embodiments of the present invention, it is preferred to adjust the content of the compound of general formula I, such that the liquid crystal composition comprising the same has an appropriate optical anisotropy, an appropriate clearing point, a higher $\varepsilon_{\perp}$, a larger $K_{ave}$ value and a smaller LC scattering.

In some embodiments of the present invention, the compound of general formula II is any one or the combination of at least two of the compounds with the following structures:

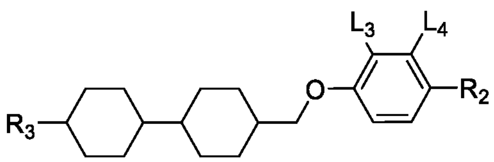

II-1;

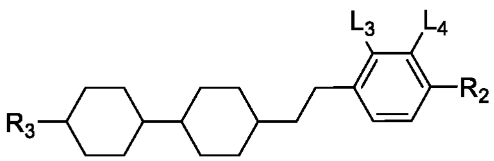

II-2;

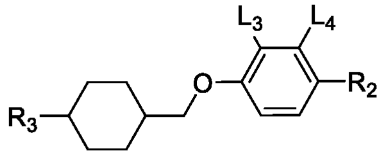

II-3;

and

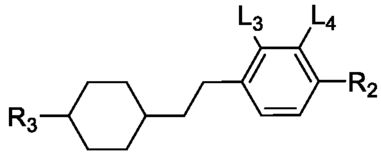

II-4.

In some embodiments of the present invention, $L_3$ and $L_4$ both represent fluorine atom.

In some embodiments of the present invention, the compound of general formula II comprises the compound of general formula II-2 and/or the compound of general formula II-4.

In some embodiments of the present invention, the liquid crystal composition comprises at least two (for example, it can be two, three, four or five) compounds of general formula II.

In some embodiments of the present invention, the compound of general formula II comprises at least one compound selected from a group consisting of the compound of general formula II-1 and general formula II-3 and at least one compound selected from a group consisting of the compounds of general formula II-2 and general formula II-4.

In some embodiments of the present invention, in the liquid crystal composition, percentage by weight of the compound of general formula II is 0.1%~60%, for example, it can be 0.1%, 0.2%, 0.5%, 1%, 2%, 4%, 6%, 8%, 10%, 15%, 20%, 25%, 30%, 35%, 40%, 45%, 50%, 55%, 60% or the like, further preferably, 8%~60%.

In some embodiments of the present invention, it is preferred to adjust the content of the compound of general formula II such that the liquid crystal composition comprising the same has an appropriate optical anisotropy, an appropriate clearing point, a higher $\varepsilon_{\perp}$, a larger $K_{ave}$ value and a smaller LC scattering.

In some embodiments of the present invention, the liquid crystal composition further comprises at least one compound of general formula N:

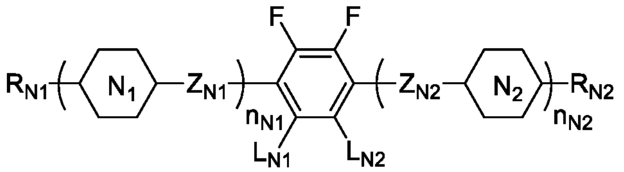

N,

wherein, $R_{N1}$ and $R_{N2}$ each independently represents $C_{1-12}$ (for example, it can be $C_1$, $C_2$, $C_3$, $C_4$, $C_5$, $C_6$, $C_7$, $C_8$, $C_9$, $C_{10}$, $C_{11}$ or $C_{12}$) linear alkyl, $C_{3-12}$ (for example, it can be $C_3$, $C_4$, $C_5$, $C_6$, $C_7$, $C_8$, $C_9$, $C_{10}$, $C_{11}$ or $C_{12}$) branched alkyl,

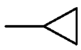, 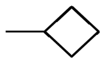

or

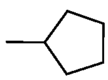,

wherein, one or any more than two nonadjacent $-CH_2-$ in the $C_{1-12}$ linear alkyl and $C_{3-12}$ branched alkyl can each be independently replaced by -CH=CH-, -C≡C-, -O-, -CO-, -CO-O- or -O-CO-;

ring

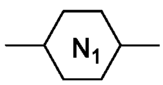

and ring

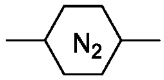

each independently represents

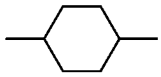 or 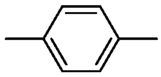,

wherein one or at least two $-CH_2-$ in

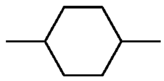

can be replaced by -O-, one or at least two single bond in the rings can be replaced by double bond; one or at least two -H on

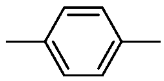

can each be independently replaced by -F, -Cl or -CN, one or at least two -CH= in the rings can be replaced by -N=;
$Z_{N1}$ and $Z_{N2}$ each independently represents single bond, -CO-O-, -O-CO-, -CH=CH-, -C≡C-, $-CF_2CF_2-$, $-(CH_2)_4-$, $-CF_2O-$ or $-OCF_2-$;
$L_{N1}$ and $L_{N2}$ each independently represents -H, $C_{1-3}$ (for example, it can be $C_1$, $C_2$ or $C_3$) alkyl, or halogen atom; and $n_{N1}$ represents 0, 1, 2 or 3, $n_{N2}$ represents 0 or 1, and $0 \leq n_{N1}+n_{N2} \leq 3$, wherein, when $n_{N1}$ represents 2 or 3, ring

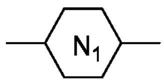

can be the same or different, $Z_{N1}$ can be the same or different.

In some embodiments of the present invention, the compound of general formula N is any one or the combination of at least two of the compounds with the following structures:

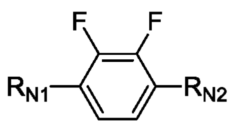 N-1;

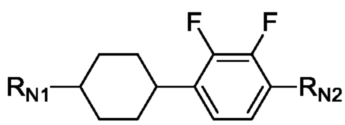 N-2;

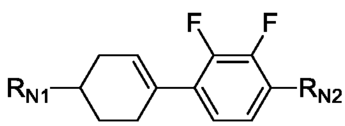 N-3;

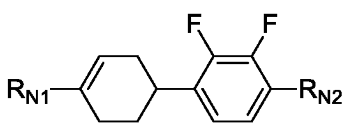 N-4;

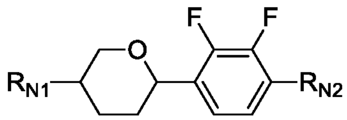

N-5;

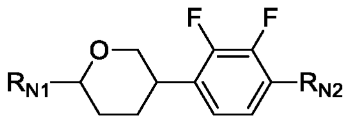

N-6;

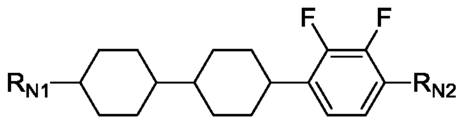

N-7;

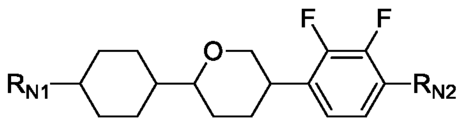

N-8;

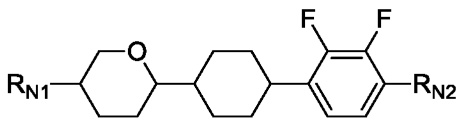

N-9;

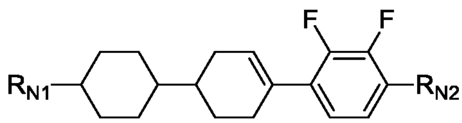

N-10;

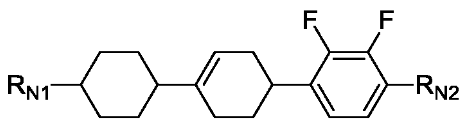

N-11;

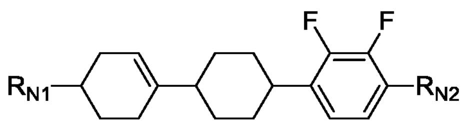

N-12;

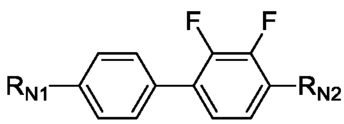

N-13;

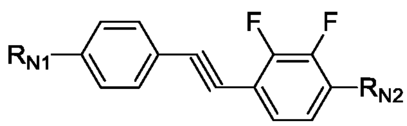

N-14;

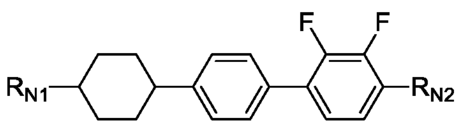

N-15;

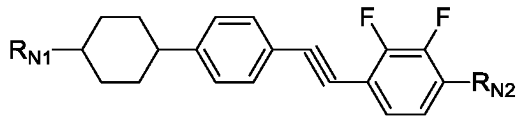

N-16;

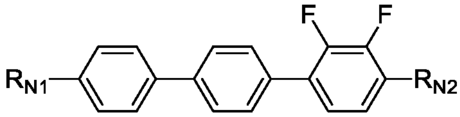

N-17;

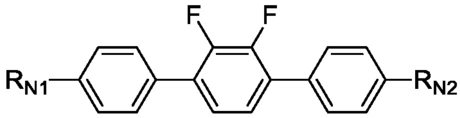

N-18;

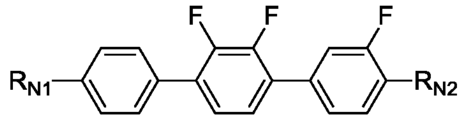

N-19;

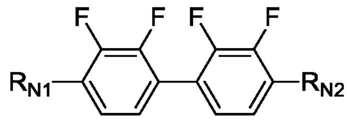

N-20;

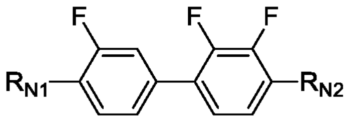

N-21;

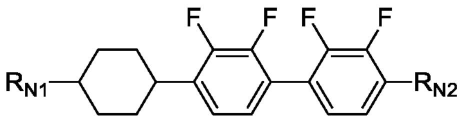

N-22;

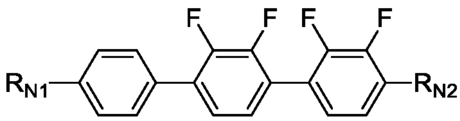

N-23;

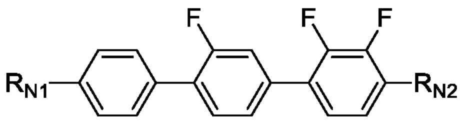

N-24;

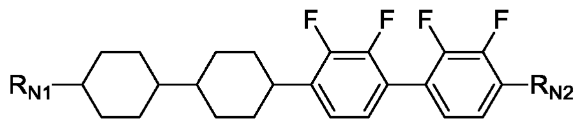

N-25;

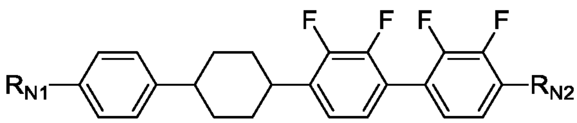

N-26;

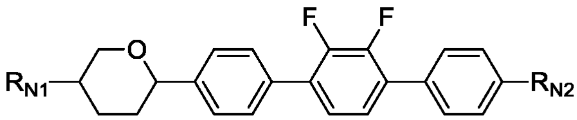

N-27;

and

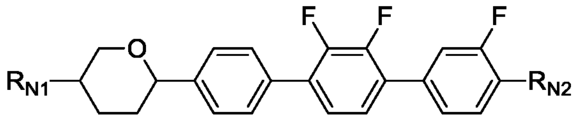

N-28.

In some embodiments of the present invention, the compound of general formula N is selected from a group consisting of the compound of general formula N-2, the compound of general formula N-3, the compound of general formula N-7, the compound of general formula N-10, the compound of general formula N-13, the compound of general formula N-15, and the compound of general formula N-17.

In some embodiments of the present invention, in the liquid crystal composition, percentage by weight of the compound of general formula N is 0.1%~50%, for example, it can be 0.1%, 0.2%, 0.5%, 1%, 2%, 4%, 6%, 8%, 10%, 15%, 20%, 25%, 30%, 35%, 40%, 45%, 50% or the like, further preferably, 2%~45%.

In some embodiments of the present invention, it is preferred to adjust the content of the compound of general formula N such that the liquid crystal composition comprising the same has an appropriate optical anisotropy, an appropriate clearing point, a higher $\varepsilon_{\perp}$, a larger $K_{ave}$ value and a smaller LC scattering.

In some embodiments of the present invention, the liquid crystal composition further comprises at least one compound of general formula M:

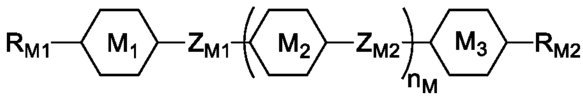

M,

wherein, $R_{M1}$ and $R_{M2}$ each independently represents $C_{1-12}$ (for example, it can be $C_1$, $C_2$, $C_3$, $C_4$, $C_5$, $C_6$, $C_7$, $C_8$, $C_9$, $C_{10}$, $C_{11}$ or $C_{12}$) linear alkyl, $C_{3-12}$ (for example, it can be $C_3$, $C_4$, $C_5$, $C_6$, $C_7$, $C_8$, $C_9$, $C_{10}$, $C_{11}$ or $C_{12}$) branched alkyl,

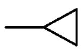, 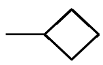

or

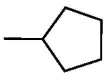,

wherein, one or at least two nonadjacent $-CH_2-$ in the $C_{1-12}$ linear alkyl or $C_{3-12}$ branched alkyl can each be independently replaced by -CH=CH-, -C≡C-, -O-, -CO-, -CO-O- or -O-CO-;

ring

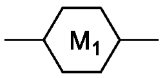,

ring

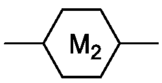

and

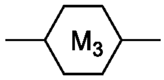

each independently represents

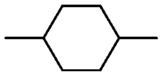 or 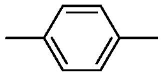 ,

wherein, one or at least two $-CH_2-$ in

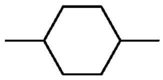

can be replaced by -O-, one or at least two single bond in the rings can be replaced by double bond; at most one -H on

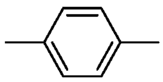

can be replaced by halogen atom;

$Z_{M1}$ and $Z_{M2}$ each independently represents single bond, -CO-O-, -O-CO-, $-CH_2O-$, $-OCH_2-$, -C≡C-, -CH=CH-, $-CH_2CH_2-$ or $-(CH_2)_4-$; and

$n_M$ represents 0, 1 or 2, wherein, when $n_M$ represents 2, ring

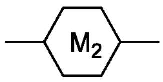

can be the same or different, $Z_{M2}$ can be the same or different.

In some embodiments of the present invention, the compound of general formula M is any one or the combination of at least two of the compounds with the following structures:

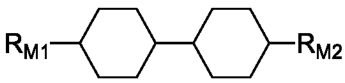 M-1;

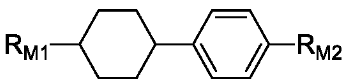 M-2;

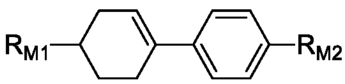 M-3;

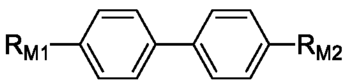 M-4;

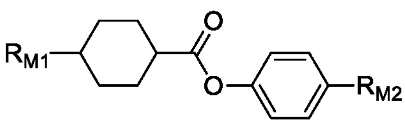 M-5;

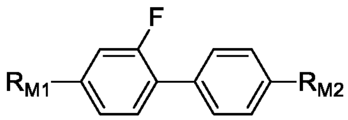
M-6;

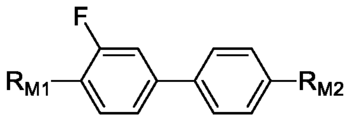
M-7;

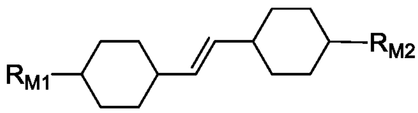
M-8;

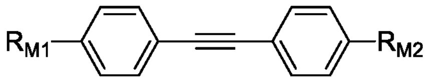
M-9;

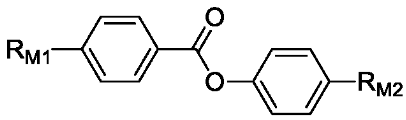
M-10;

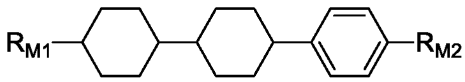
M-11;

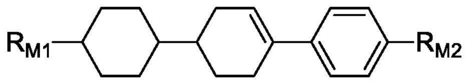
M-12;

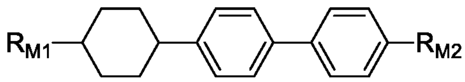
M-13;

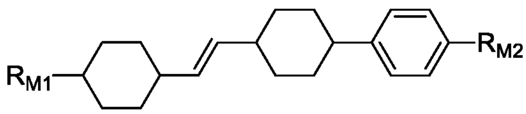
M-14;

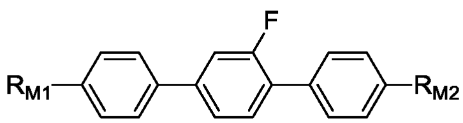
M-15;

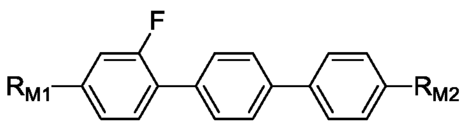
M-16;

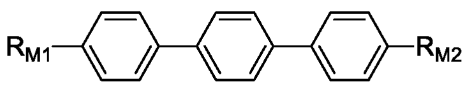
M-17;

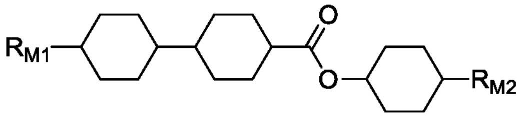

M-18;

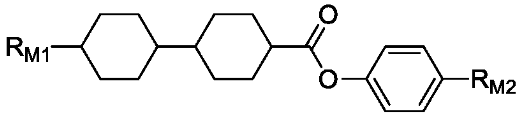

M-19;

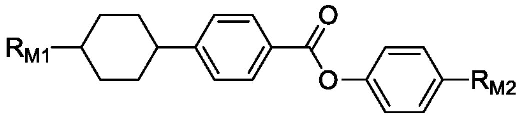

M-20;

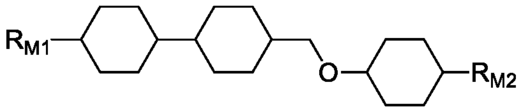

M-21;

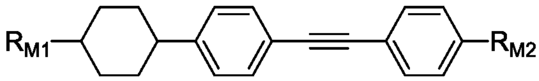

M-22;

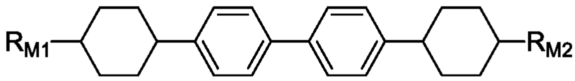

M-23;

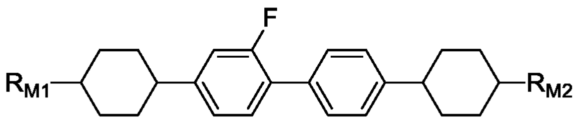

M-24;

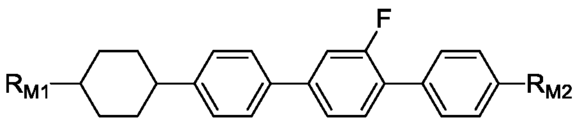

M-25;

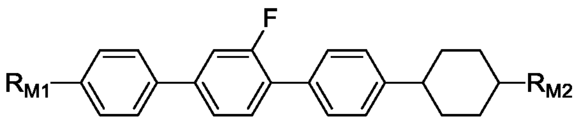

M-26;

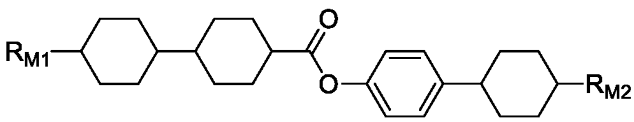

M-27;

and

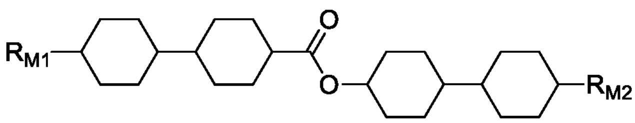

M-28.

In some embodiments of the present invention, the compound of general formula M is selected from a group consisting of the compound of general formula M-1, the compound of general formula M-2, the compound of general formula M-4, the compound of general formula M-11, the compound of general formula M-13, the compound of general

formula M-21, the compound of general formula M-23, the compound of general formula M-24, and the compound of general formula M-27.

In some embodiments of the present invention, in the liquid crystal composition, percentage by weight of the compound of general formula M is 0.1%-60%, for example, it can be 0.1%, 0.2%, 0.5%, 1%, 2%, 4%, 6%, 8%, 10%, 15%, 20%, 25%, 30%, 35%, 40%, 45%, 50%, 55%, 60% or the like, further preferably, 30%-50%.

In some embodiments of the present invention, the liquid crystal composition further comprises at least one compound of general formula B:

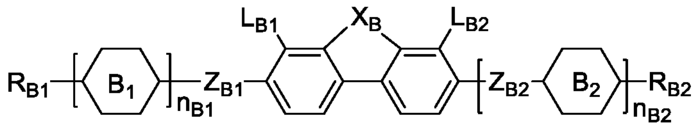 B,

wherein, $R_{B1}$ and $R_{B2}$ each independently represents halogen atom, $-CF_3$, $-OCF_3$, $C_{1-12}$ (for example, it can be $C_1$, $C_2$, $C_3$, $C_4$, $C_5$, $C_6$, $C_7$, $C_8$, $C_9$, $C_{10}$, $C_{11}$ or $C_{12}$) linear alkyl, $C_{3-12}$ (for example, it can be $C_3$, $C_4$, $C_5$, $C_6$, $C_7$, $C_8$, $C_9$, $C_{10}$, $C_{11}$ or $C_{12}$) branched alkyl,

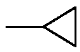, 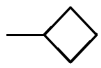 or 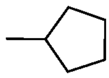,

wherein one or at least two nonadjacent $-CH_2-$ in the $C_{1-12}$ linear alkyl, $C_{3-12}$ branched alkyl,

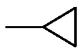, 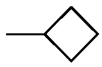 or 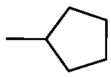

can each be independently replaced by -O-, -CO-, -CO-O- or -O-CO-; one or at least two nonadjacent $-CH_2-$ in the $C_{1-12}$ linear alkyl, $C_{3-12}$ branched alkyl,

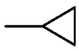

or

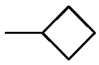

can each be independently replaced by -CH=CH- or -C≡C-;

ring

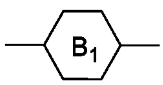

and ring

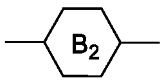

each independently represents

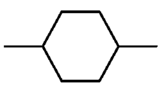, 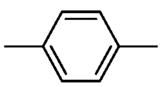 or 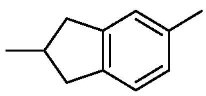,

wherein one or at least two nonadjacent $-CH_2-$ in

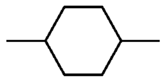 and 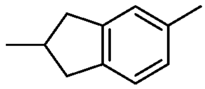

can be replaced by -O-, one or at least two single bond in the rings can be replaced by double bond; one or at least two -H on

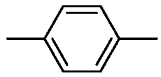 and 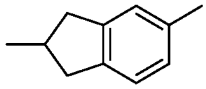

can each be independently replaced by -CN, -F or -Cl, one or at least two -CH= in the rings can be replaced by -N=;
$X_B$ represents -O-, -S- or -CO-;
$L_{B1}$ and $L_{B2}$ each independently represents -H, -F, -Cl, $-CF_3$ or $-OCF_3$;
$Z_{B1}$ and $Z_{B2}$ each independently represents single bond, -O-, -CO-O-, -O-CO-, $-CH_2O-$, $-OCH_2-$, -CH=CH-, -C≡C-, $-CH_2CH_2-$, $-CF_2CF_2-$, $-(CH_2)_4-$, $-CF_2O-$ or $-OCF_2-$;
$n_{B1}$ and $n_{B2}$ each independently represents 0, 1 or 2, wherein when $n_{B1}$ represents 2, ring

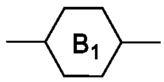

can be the same or different, when $n_{B2}$ represents 2, ring

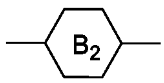

can be the same or different, $Z_{B2}$ can be the same or different.

In some embodiments of the present invention, the compound of general formula B is any one or the combination of at least two of the compounds with the following structures:

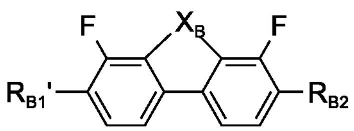 B-1;

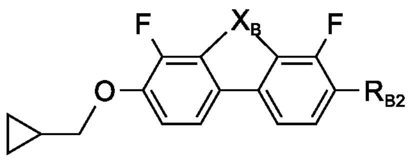 B-2;

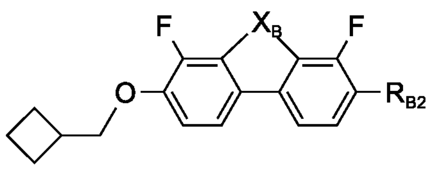 B-3;

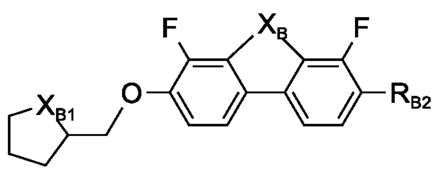 B-4;

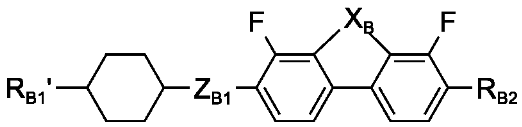

B-5;

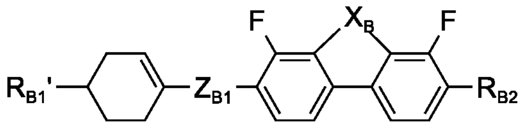

B-6;

and

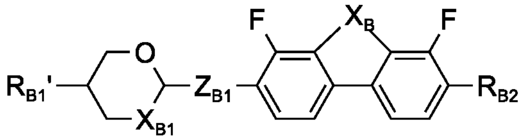

B-7,

wherein, $R_{B1}$' represents halogen atom, $-CF_3$, $-OCF_3$, $C_{1-8}$ (for example, it can be $C_1$, $C_2$, $C_3$, $C_4$, $C_5$, $C_6$, $C_7$ or $C_8$) liner alkyl, $C_{3-8}$ (for example, it can be $C_3$, $C_4$, $C_5$, $C_6$, $C_7$ or $C_8$) branched alkyl, $C_{1-8}$ (for example, it can be $C_1$, $C_2$, $C_3$, $C_4$, $C_5$, $C_6$, $C_7$ or $C_8$) alkoxy, $C_{2-8}$ (for example, it can be $C_2$, $C_3$, $C_4$, $C_5$, $C_6$, $C_7$ or $C_8$) alkenyl;

$X_{B1}$ represents -O- or $-CH_2-$;

$R_{B2}$, $X_B$ and $Z_{B1}$ have the same protection scopes as aforesaid.

In some embodiments of the present invention, in the liquid crystal composition, percentage by weight of the compound of general formula B is 0.1%-20%, for example, it can be 0.1%, 0.2%, 0.5%, 1%, 2%, 4%, 5%, 7%, 8%, 10%, 12%, 14%, 16%, 18%, 20% or the like.

In some embodiments of the present invention, in order to apply the liquid crystal composition of the present invention into liquid crystal display devices with high transmittance, the liquid crystal composition further comprises at least one compound of general formula A-1 and/or at least one compound of general formula A-2:

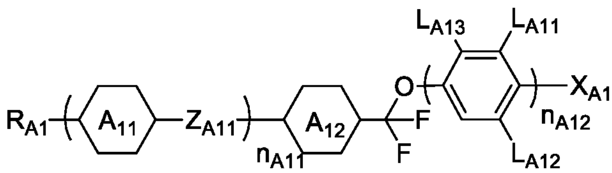

A-1;

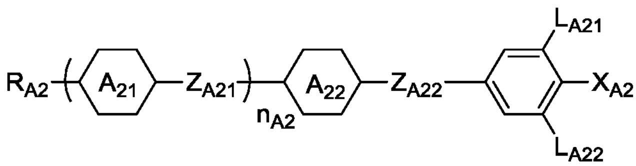

A-2,

wherein, $R_{A1}$ and $R_{A2}$ each independently represents $C_{1-12}$ (for example, it can be $C_1$, $C_2$, $C_3$, $C_4$, $C_5$, $C_6$, $C_7$, $C_8$, $C_9$, $C_{10}$, $C_{11}$ or $C_{12}$) linear alkyl, $C_{3-12}$ (for example, it can be $C_3$, $C_4$, $C_5$, $C_6$, $C_7$, $C_8$, $C_9$, $C_{10}$, $C_{11}$ or $C_{12}$) branched alkyl,

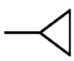

,

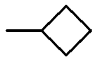

or

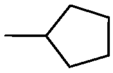

,

wherein, one or at least two nonadjacent $-CH_2-$ in the $C_{1-12}$ linear alkyl, $C_{3-12}$ branched alkyl,

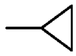, 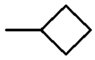 or 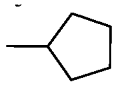

can each be independently replaced by -CH=CH-, -C≡C-, -O-, -CO-, -CO-O- or -O-CO-; and one or at least two -H in the $C_{1-12}$ linear alkyl, $C_{3-12}$ branched alkyl,

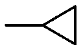, 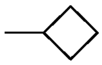 or 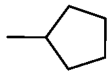

can each be independently replaced by -F or -Cl;

ring

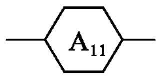,

ring

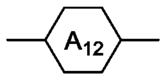,

ring

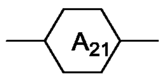 and 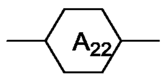

each independently represents

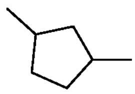, 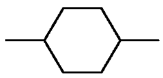, 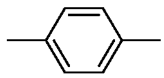

or

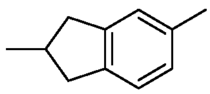,

wherein, one or at least two $-CH_2-$ in

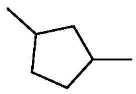, 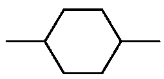

and

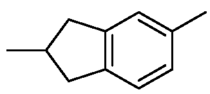

can be replaced by -O-, one or at least two single bond in the rings can be replaced by double bond; one or at least two -H on

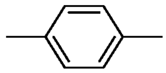

and

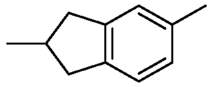

can each be independently replaced by -F, -Cl or -CN, one or at least two -CH= in the rings can be replaced by -N=;

$Z_{A11}$, $Z_{A21}$ and $Z_{A22}$ each independently represents single bond, $-CH_2CH_2-$, $-CF_2CF_2-$, -CO-O-, -O-CO-, -O-CO-O-, -CH=CH-, -CF=CF-, $-CH_2O-$ or $-OCH_2-$;

$L_{A11}$, $L_{A12}$, $L_{A13}$, $L_{A21}$ and $L_{A22}$ each independently represents -H, $C_{1-3}$ (for example, it can be $C_1$, $C_2$ or $C_3$) alkyl, or halogen atom;

$X_{A1}$ and $X_{A2}$ each independently represents halogen atom, $C_{1-5}$ (for example, it can be $C_1$, $C_2$, $C_3$, $C_4$ or $C_5$) halogenated linear alkyl, $C_{3-5}$ (for example, it can be $C_3$, $C_4$ or $C_5$) halogenated branched alkyl, $C_{1-5}$ (for example, it can be $C_1$, $C_2$, $C_3$, $C_4$ or $C_5$) halogenated alkoxy, $C_{2-5}$ (for example, it can be $C_2$, $C_3$, $C_4$ or $C_5$) halogenated alkenyl, or $C_{2-5}$ (for example, it can be $C_2$, $C_3$, $C_4$ or $C_5$) halogenated alkenoxy;

$n_{A11}$ represents 0, 1, 2 or 3, wherein when $n_{A11}$ represents 2 or 3, ring

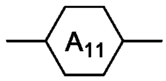

can be the same or different, and $Z_{A11}$ can be the same or different;

$n_{A12}$ represents 1 or 2, wherein when $n_{A12}$ represents 2, ring

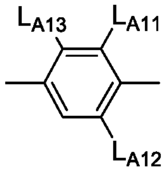

can be same or different; and

$n_{A2}$ represents 0, 1, 2 or 3, wherein when $n_{A2}$ represents 2 or 3, ring

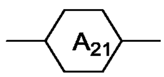

can be the same or different, and $Z_{A21}$ can be the same or different.

In some embodiments of the present invention, the compound of general formula A-1 is any one or the combination of at least two of the compounds with the following structures:

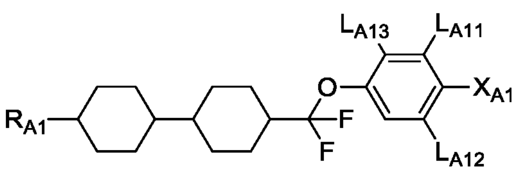

A-1-1;

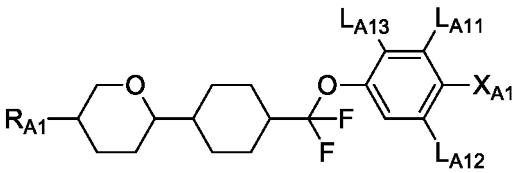

A-1-2;

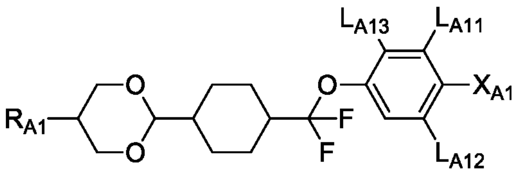

A-1-3;

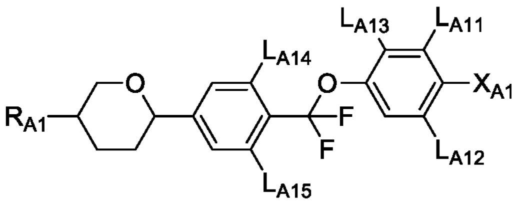

A-1-4;

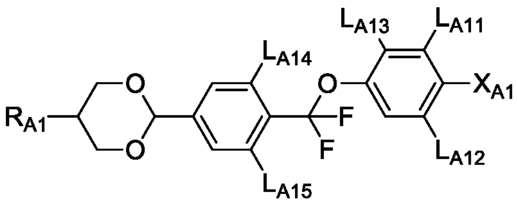

A-1-5;

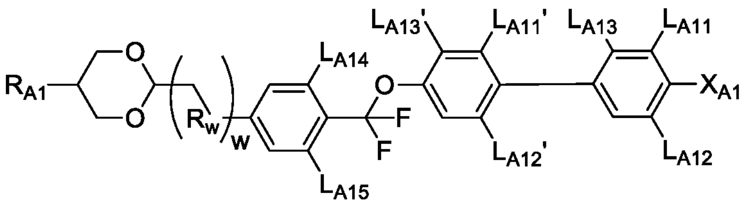

A-1-6;

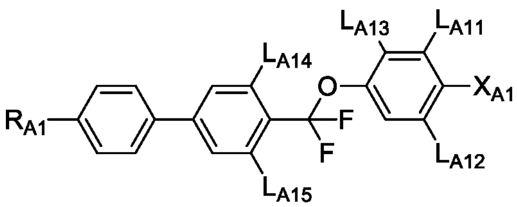

A-1-7;

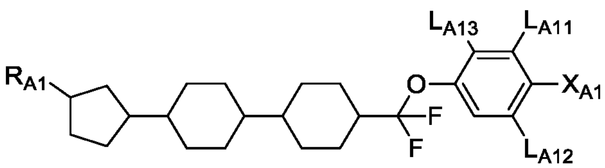

A-1-8;

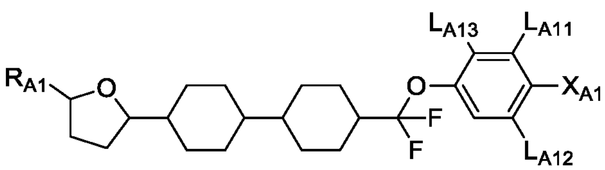

A-1-9;

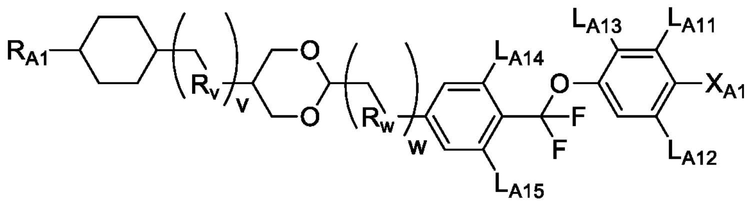

A-1-10;

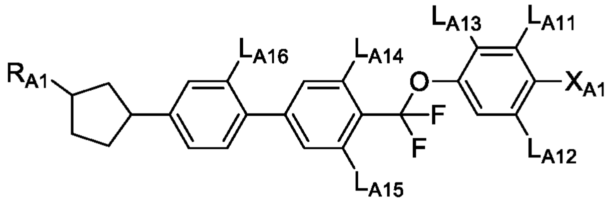

A-1-11;

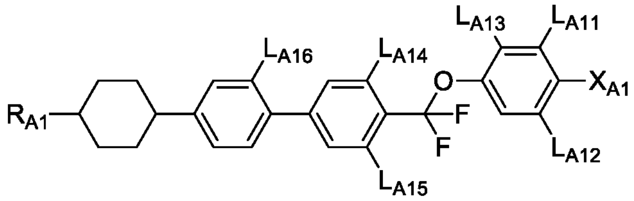

A-1-12;

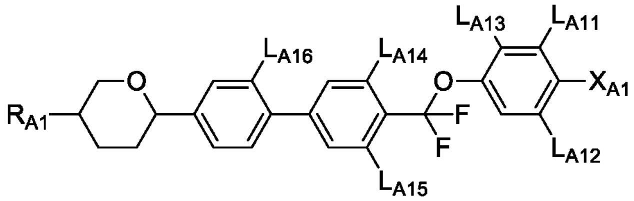

A-1-13;

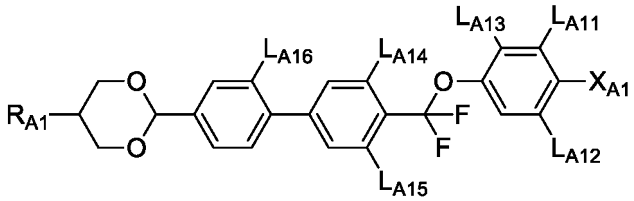

A-1-14;

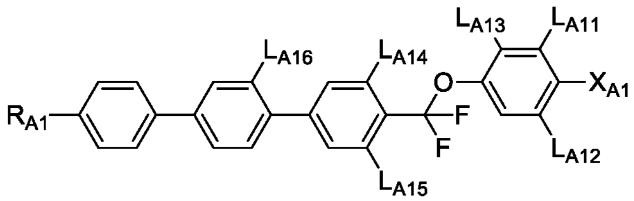

A-1-15;

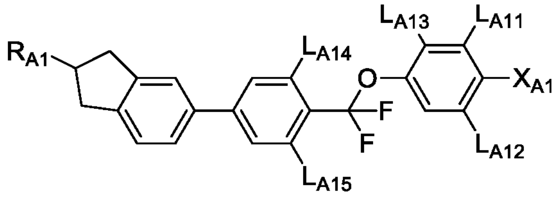

A-1-16;

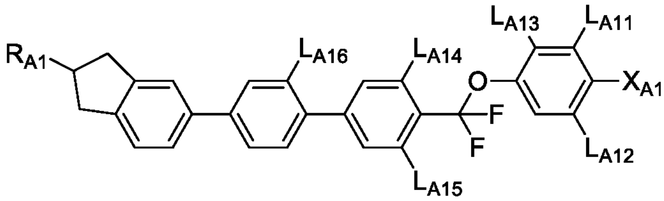

A-1-17;

and

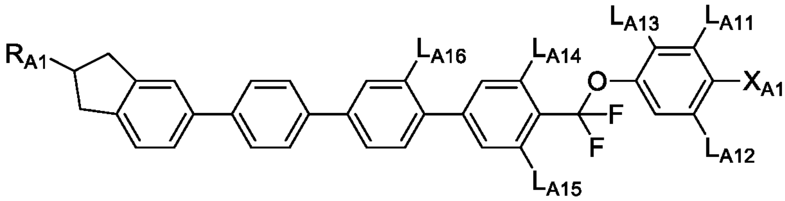

A-1-18,

wherein, $R_{A1}$ represents $C_{1-8}$ (for example, it can be $C_1$, $C_2$, $C_3$, $C_4$, $C_5$, $C_6$, $C_7$ or $C_8$) linear alkyl, $C_{3-8}$ (for example, it can be $C_3$, $C_4$, $C_5$, $C_6$, $C_7$ or $C_8$) branched alkyl,

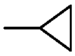, 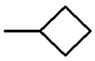 or 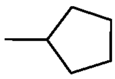,

wherein, one or at least two nonadjacent $-CH_2-$ in the $C_{1-8}$ linear alkyl and $C_{3-8}$ branched alkyl can each be independently replaced by -CH=CH-, -C≡C-, -O-, -CO-, -CO-O- or -O-CO-, and one or at least two -H in the $C_{1-8}$ linear alkyl, $C_{3-8}$ branched alkyl

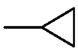, 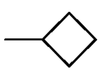 or 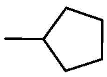

can each be independently replaced by -F or -Cl;
$R_v$ and $R_w$ each independently represents $-CH_2-$ and -O-;
v and w each independently represents 0 or 1;
$L_{A11}$, $L_{A12}$, $L_{A11}$', $L_{A12}$', $L_{A14}$, $L_{A15}$ and $L_{A16}$ each independently represents -H or -F;
$L_{A13}$ and $L_{A13}$' each independently represents -H or $-CH_3$; and
$X_{A1}$ represents -F, $-CF_3$ or $-OCF_3$.

In some embodiments of the present invention, in the liquid crystal composition, percentage by weight of the compound of general formula A-1 is 0.1%-50%, for example, it can be 0.1%, 1%, 4%, 6%, 8%, 10%, 12%, 14%, 16%, 18%, 20%, 22%, 24%, 26%, 28%, 30%, 32%, 34%, 36%, 38%, 40%, 42%, 44%, 46%, 48%, 50% or the like.

In some embodiments of the present invention, the compound of general formula A-2 is any one or the combination of at least two of the compounds with the following structures:

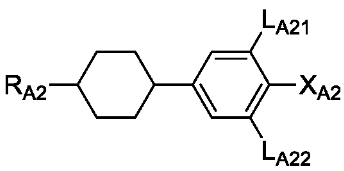

A-2-1;

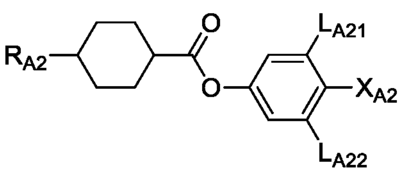

A-2-2;

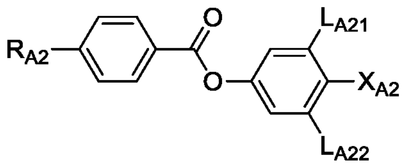

A-2-3;

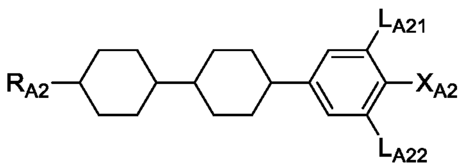

A-2-4;

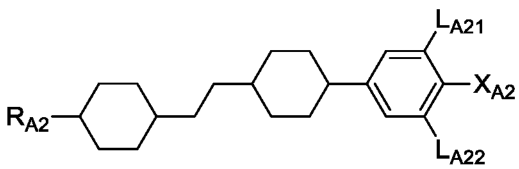

A-2-5;

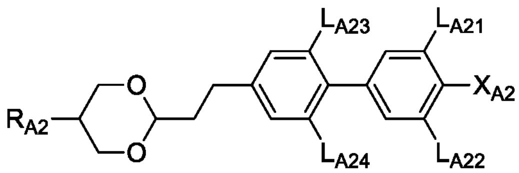

A-2-6;

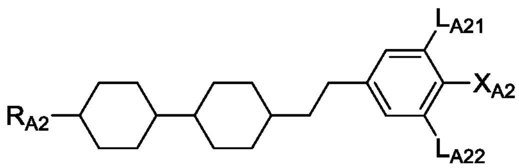

A-2-7;

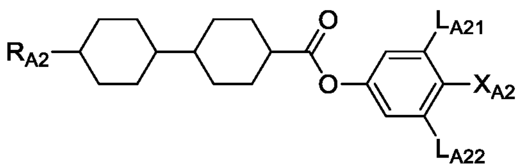

A-2-8;

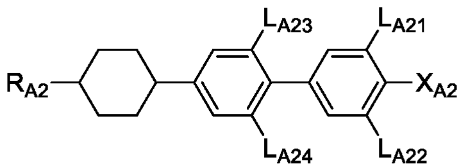

A-2-9;

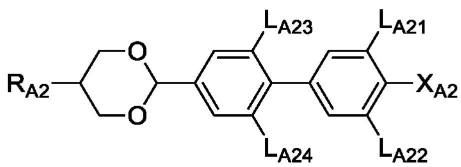

A-2-10;

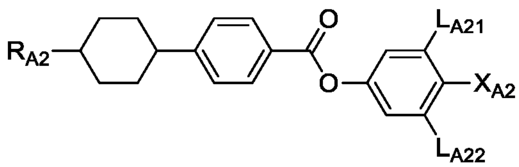

A-2-11;

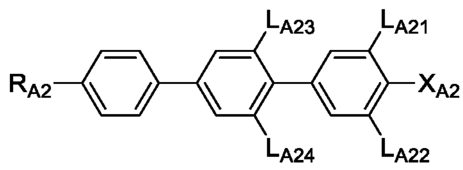

A-2-12;

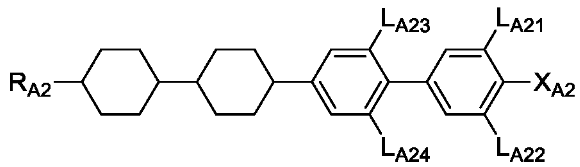

A-2-13;

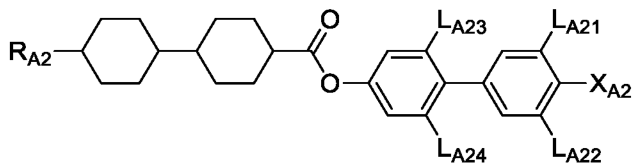

A-2-14;

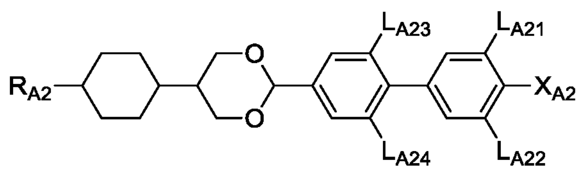

A-2-15;

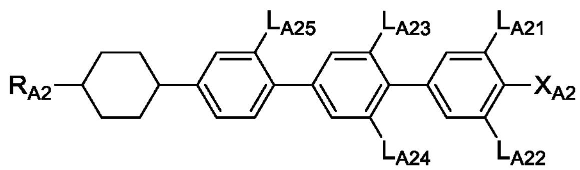

A-2-16;

and

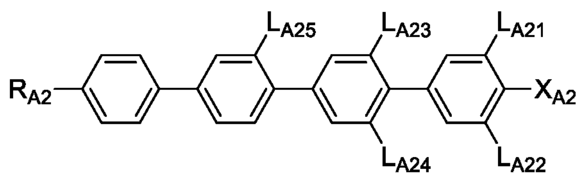

A-2-17,

wherein, $R_{A2}$ represents $C_{1-8}$ (for example, it can be $C_1$, $C_2$, $C_3$, $C_4$, $C_5$, $C_6$, $C_7$ or $C_8$) linear alkyl, $C_{3-8}$ (for example, it can be $C_3$, $C_4$, $C_5$, $C_6$, $C_7$ or $C_8$) branched alkyl, wherein, one or at least two nonadjacent $-CH_2-$ in the $C_{1-8}$ linear alkyl and $C_{3-8}$ branched alkyl can each be independently replaced by -CH=CH-, -C≡C-, -O-, -CO-, -CO-O- or -O-CO-, and one or at least two -H in the $C_{1-8}$ linear alkyl and $C_{3-8}$ branched alkyl can each be independently replaced by -F or -Cl;
$L_{A21}$, $L_{A22}$, $L_{A23}$, $L_{A24}$ and $L_{A25}$ each independently represents -H or -F; and
$X_{A2}$ represents -F, $-CF_3$, $-OCF_3$ or $-CH_2CH_2CH=CF_2$.

In some embodiments of the present invention, in the liquid crystal composition, percentage by weight of the compound of general formula A-2 is 0.1%-50%, for example, it can be 0.1%, 1%, 4%, 6%, 8%, 10%, 12%, 14%, 16%, 18%, 20%, 22%, 24%, 26%, 28%, 30%, 32%, 34%, 36%, 38%, 40%, 42%, 44%, 46%, 48%, 50% or the like.

In some embodiments of the present invention, in the liquid crystal composition, sum of percentages by weight of the compound of general formula A-1 and the compound of general formula A-2 is 0.1%-60%, for example, it can be 0.1%, 1%, 4%, 6%, 8%, 10%, 12%, 14%, 16%, 18%, 20%, 22%, 24%, 26%, 28%, 30%, 32%, 34%, 36%, 38%, 40%, 42%, 44%, 46%, 48%, 50%, 52%, 54%, 56%, 58%, 60% or the like.

In some embodiments of the present invention, the liquid crystal composition further comprises at least one polymerizable compound of general formula RM:

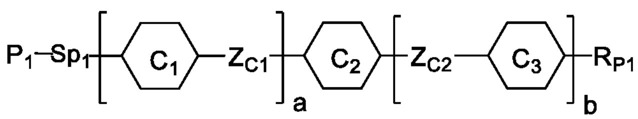 RM,

wherein, $R_{p1}$ represents -H, halogen atom, -CN, $-Sp_2-P_2$, $C_{1-12}$ (for example, it can be $C_1$, $C_2$, $C_3$, $C_4$, $C_5$, $C_6$, $C_7$, $C_8$, $C_9$, $C_{10}$, $C_{11}$ or $C_{12}$) linear alkyl, $C_{3-12}$ (for example, it can be $C_3$, $C_4$, $C_5$, $C_6$, $C_7$, $C_8$, $C_9$, $C_{10}$, $C_{11}$ or $C_{12}$) branched alkyl,

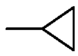,

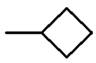 or 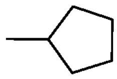,

wherein, one or at least two nonadjacent $-CH_2-$ in the $C_{1-12}$ linear alkyl, $C_{3-12}$ branched alkyl,

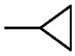, 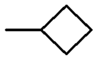 or 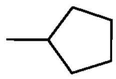

can each be independently replaced by -CH=CH-, -C≡C-, -O-, -CO-, -CO-O- or -O-CO-, and one or at least two -H can each be independently replaced by -F or -Cl;

ring

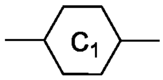

and ring

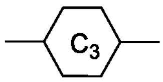

each independently represents

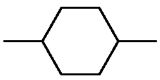, 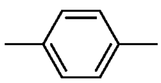 or 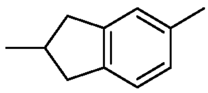,

wherein, one or at least two $-CH_2-$ in

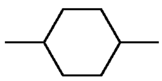 and 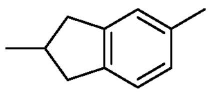

can be replaced by -O-, one or at least two single bond in the rings can be replaced by double bond; one or at least two -H on

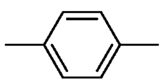 and 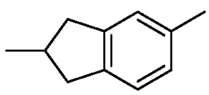

can each be independently replaced by -F, -Cl, -CN, $-Sp_3-P_3$, $C_{1-12}$ (for example, it can be $C_1$, $C_2$, $C_3$, $C_4$, $C_5$, $C_6$, $C_7$, $C_8$, $C_9$, $C_{10}$, $C_{11}$ or $C_{12}$) halogenated or unhalogenated linear alkyl, $C_{1-11}$ (for example, it can be $C_1$, $C_2$, $C_3$, $C_4$, $C_5$, $C_6$, $C_7$, $C_8$, $C_9$, $C_{10}$ or $C_{11}$) halogenated or unhalogenated linear alkoxy,

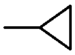, 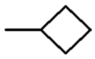 or 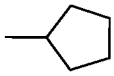,

and one or at least two -CH= in the rings can be replaced by -N=;
ring

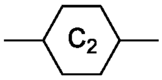

represents

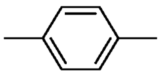, 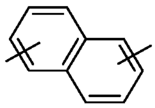, 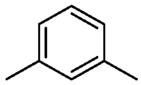,

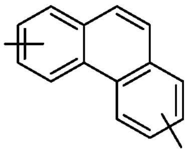 or 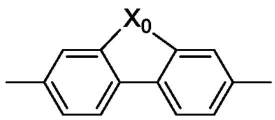,

wherein one or at least two -H on ring

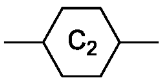

can each be independently replaced by -F, -Cl, -CN, $-Sp_3-P_3$, $C_{1-12}$ (for example, it can be $C_1$, $C_2$, $C_3$, $C_4$, $C_5$, $C_6$, $C_7$, $C_8$, $C_9$, $C_{10}$, $C_{11}$ or $C_{12}$) halogenated or unhalogenated linear alkyl, $C_{1-11}$ (for example, it can be $C_1$, $C_2$, $C_3$, $C_4$, $C_5$, $C_6$, $C_7$, $C_8$, $C_9$, $C_{10}$ or $C_{11}$) halogenated or unhalogenated linear alkoxy,

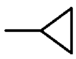, 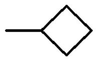

or

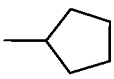,

one or at least two -CH= in the rings can each be independently replaced by -N=, $X_0$ represents -O-, -S-, -CO-, $-CF_2-$, -NH- or -NF-;
$P_1$, $P_2$ and $P_3$ each independently represents polymerizable group;
$Sp_1$, $Sp_2$ and $Sp_3$ each independently represents spacer group or single bond;
$Z_{C1}$ and $Z_{C2}$ each independently represents -O-, -S-, -CO-, -CO-O-, -O-CO-, -O-CO-O-, $-CH_2O-$, $-OCH_2-$, $-CH_2S-$, $-SCH_2-$, $-CF_2O-$, $-OCF_2-$, $-CF_2S-$, $-SCF_2-$, $-(CH_2)_d-$, $-CF_2CH_2-$, $-CH_2CF_2-$, $-(CF_2)_d-$, -CH=CH-, -CF=CF-, -CH=CF-, -CF=CH-, -C≡C-, -CH=CH-CO-O-, -O-CO-CH=CH-, $-CH_2CH_2-CO-O-$, $-O-CO-CH_2CH_2-$, $-CHR^1-$, $-CR^1R^2-$ or single bond, wherein $R^1$ and $R_2$ each independently represents $C_{1-12}$ (for example, it can be $C_1$, $C_2$, $C_3$, $C_4$, $C_5$, $C_6$, $C_7$, $C_8$, $C_9$, $C_{10}$, $C_{11}$ or $C_{12}$) linear alkyl, $C_{3-12}$ (for example, it can be $C_3$, $C_4$, $C_5$, $C_6$, $C_7$, $C_8$, $C_9$, $C_{10}$, $C_{11}$ or $C_{12}$) branched alkyl, and d represents an integer of 1-4 (for example, it can be 1, 2, 3 or 4); and
a represents 0, 1 or 2, b represents 0 or 1, wherein when a represents 2, ring

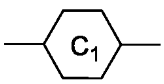

can be the same or different, and $Z_{C1}$ can be the same or different.

The polymerizable groups involved in the present invention are groups suitable for polymerization reactions (for example, it can be radical or ionic bond polymerization, addition polymerization or condensation polymerization), or groups suitable for addition or condensation on the polymer backbone. For chain polymerization, a polymerizable group containing -CH=CH- or -C≡C- is particularly preferred, and for ring-opening polymerization, for example, an oxetane or epoxy group is particularly preferred.

In some embodiments of the present invention, the polymerizable groups $P_1$, $P_2$ and $P_3$ each independently represents

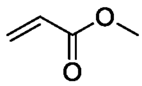 , 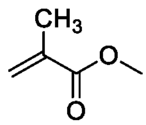 , 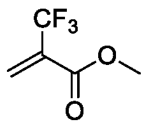 ,

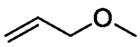 , 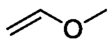 , 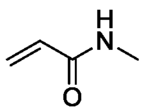 , 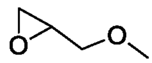 , 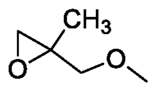 , 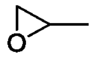 ,

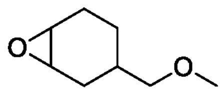 , 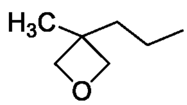 , 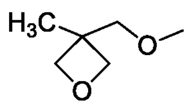 , 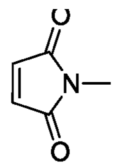

or -SH; preferably,

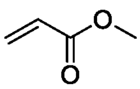 , 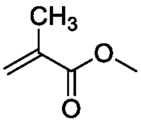 , 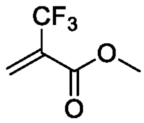 , 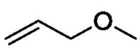 , 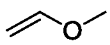 , 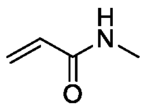 , 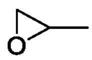 ,

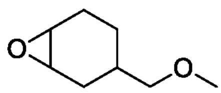 , 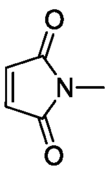

or -SH; further preferably,

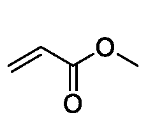 or 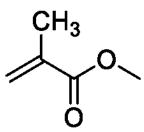 .

It should be noted that the term "spacer group" is known to the person skilled in the art and is described in the references (for example, Pure Appl. Chem. 2001,73(5),888 and C. Tschierske, G. Pelzl, S. Diele, Angew. Chem. 2004, 116, 6340-6368). As used herein, the term "spacer group" represents a flexible group which connects the mesogenic group and the polymerizable group in a polymerizable compound. For example, $-(CH_2)p_1-$, $-(CH_2CH_2O)q_1-CH_2CH_2-$, $-(CH_2CH_2S)q_1-CH_2CH_2-$, $-(CH_2CH_2NH)q_1-CH_2CH_2-$, $-CR^0R^{00}-(CH_2)p_1-$ or $-(SiR^0R^{00}-O)p_1-$ are representative spacer groups, wherein $p_1$ represents an integer of 1-12, $q_1$ represents an integer of 1-3, $R^0$ and $R^{00}$ each independently represents -H, $C_{1-12}$ linear or branched alkyl, or $C_{3-12}$ cyclic alkyl. In the present invention, the preferred spacer group is $-(CH_2)p_1-$, $-(CH_2)p_1-O-$, $-(CH_2)p_1-O-CO-$, $-(CH_2)p_1-CO-O-$, $-(CH_2)p_1-0O-CO-O-$ or $-CR^0R^{00}-(CH_2)p_1-$.

In some embodiments of the present invention, the compound of general formula RM is any one or the

combination of at least two of the compounds with the following structures:

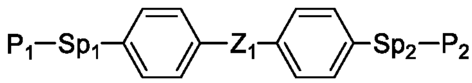

RM-1;

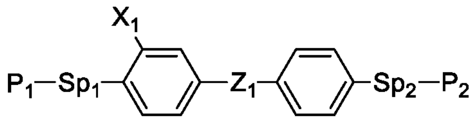

RM-2;

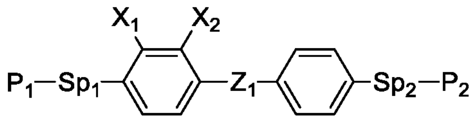

RM-3;

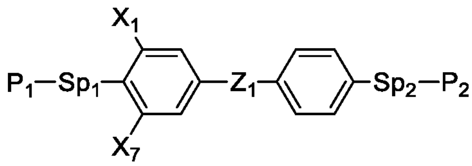

RM-4;

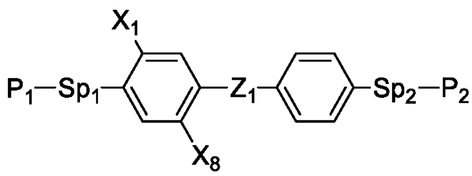

RM-5;

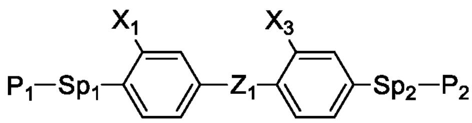

RM-6;

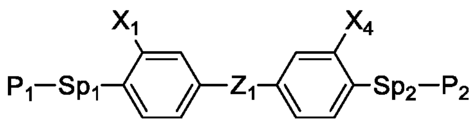

RM-7;

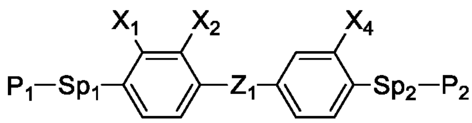

RM-8;

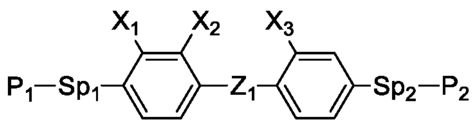

RM-9;

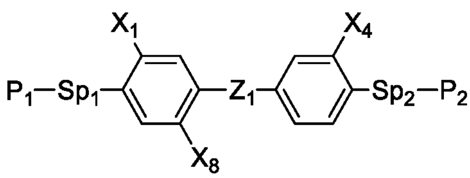

RM-10;

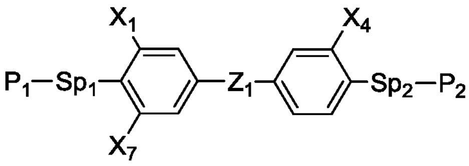
RM-11;

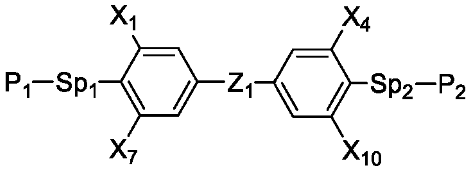
RM-12;

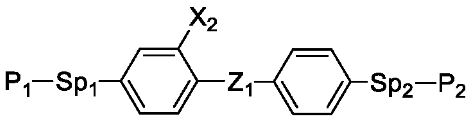
RM-13;

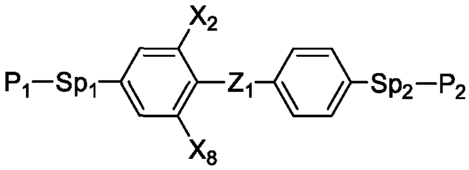
RM-14;

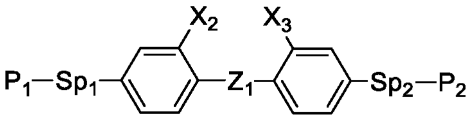
RM-15;

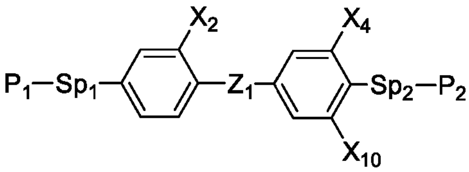
RM-16;

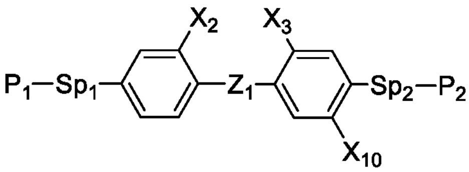
RM-17;

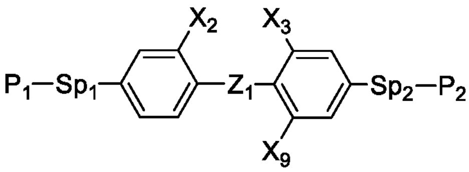
RM-18;

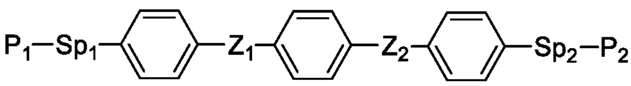
RM-19;

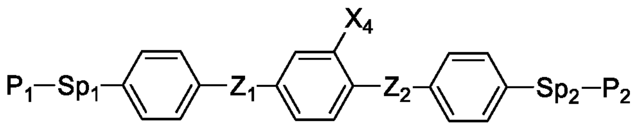

RM-20;

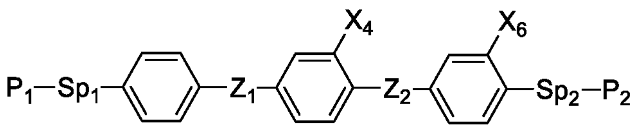

RM-21;

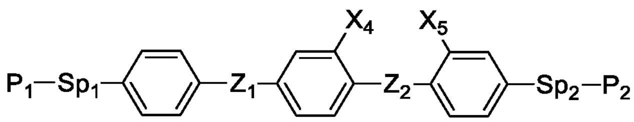

RM-22;

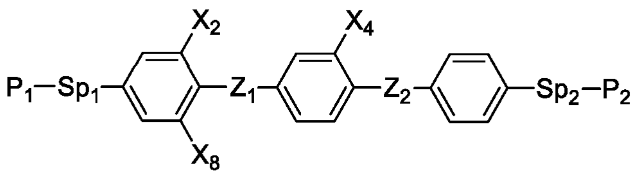

RM-23;

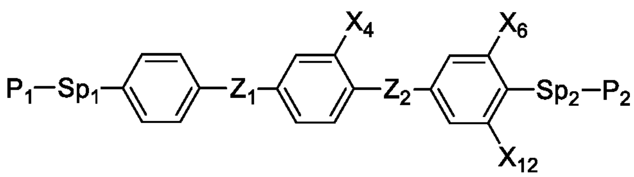

RM-24;

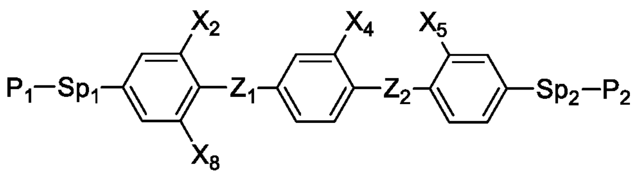

RM-25;

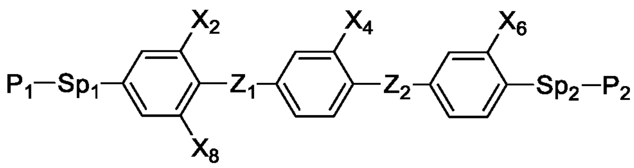

RM-26;

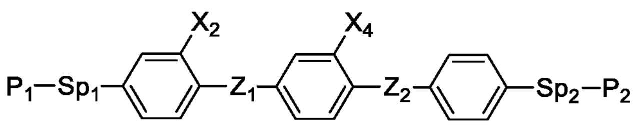

RM-27;

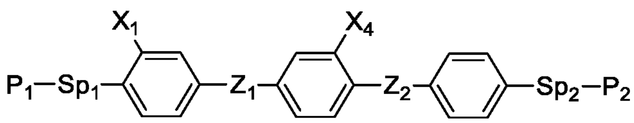

RM-28;

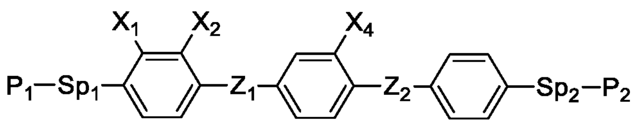

RM-29;

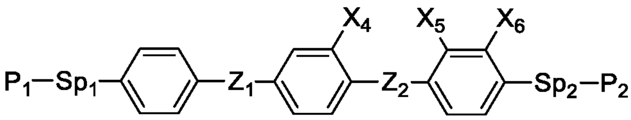

RM-30;

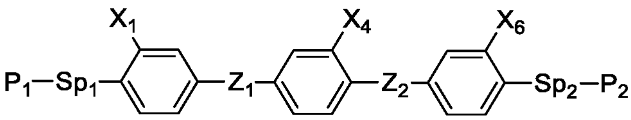

RM-31;

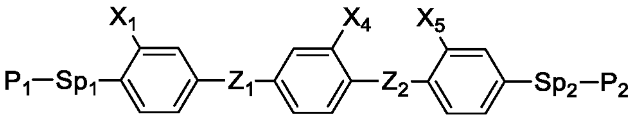

RM-32;

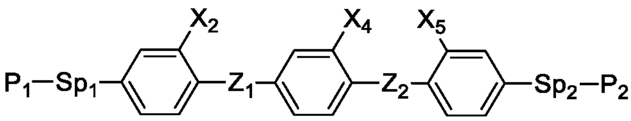

RM-33;

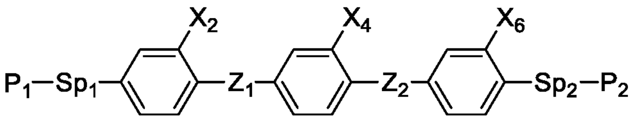

RM-34;

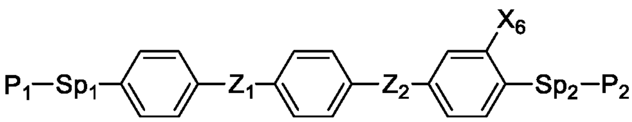

RM-35;

and

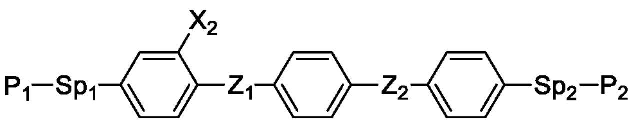

RM-36,

wherein, $X_1$-$X_{10}$ and $X_{12}$ each independently represents -F, -Cl, -$Sp_3$-$P_3$, $C_{1-5}$ (for example, it can be $C_1$, $C_2$, $C_3$, $C_4$ or $C_5$) linear alkyl, $C_{1-5}$ (for example, it can be $C_1$, $C_2$, $C_3$, $C_4$ or $C_5$) alkoxy,

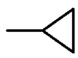, 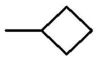 or 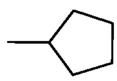.

In some embodiments of the present invention, in the liquid crystal composition, percentage by weight of the polymerizable compound of general formula RM is 0.001%-5%, for example, 0.001%, 0.002%, 0.004%, 0.005%, 0.006%, 0.008%, 0.01%, 0.02%, 0.04%, 0.06%, 0.08%, 0.1%, 0.2%, 0.25%, 0.26%, 0.27%, 0.28%, 0.29%, 0.3%, 0.32%, 0.33%, 0.34%, 0.35%, 0.4%, 0.5%, 0.6%, 0.8%, 1%, 1.2%, 1.6%, 1.8%, 2%, 2.5%, 3%, 3.5%, 4%, 4.5%, 5% or the like.

In some embodiments of the present invention, the liquid crystal composition further comprises at least one additive.

The additives contain nematic liquid crystal, smectic liquid crystal, cholesteric liquid crystal, dopants, antioxidant, ultraviolet absorber, infrared absorber, polymerizable monomer or light stabilizer.

In some embodiments of the present invention, the dopant comprises any one or the combination of at least two of the following compounds:

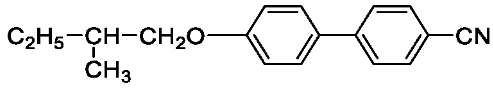

C 15;

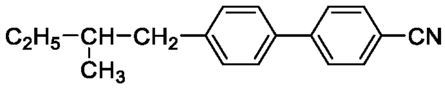

CB 15;

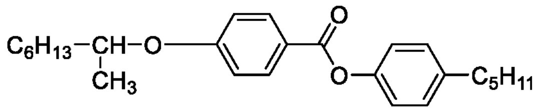

CM 21;

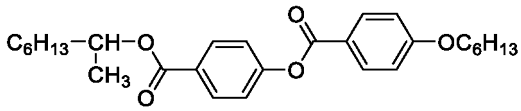

R/S-811;

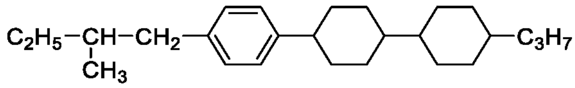

CM 44;

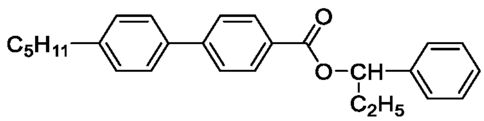

CM 45;

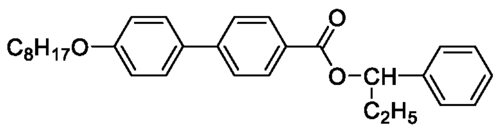

CM 47;

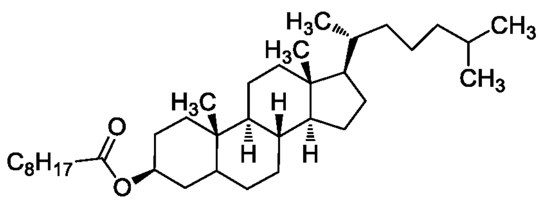

CN;

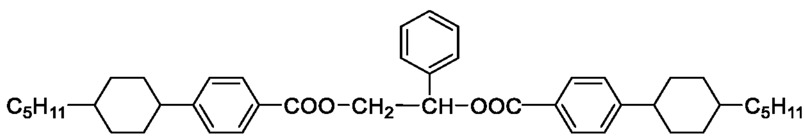

R/S-1011;

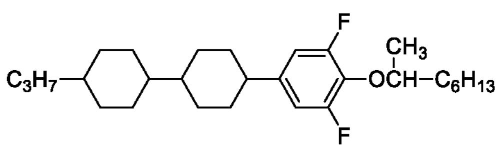

R/S-2011;

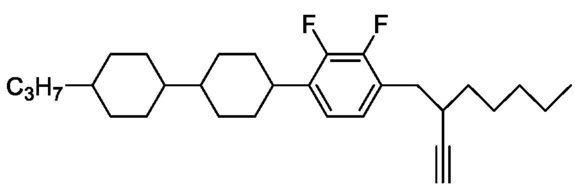

R/S-3011;

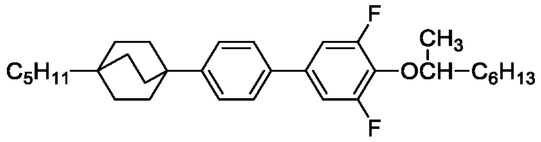

R/S-4011;

and

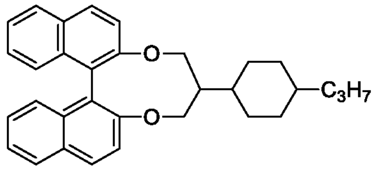

R/S-5011.

In some embodiments of the present invention, in the liquid crystal composition, percentage by weight of the dopant is 0%-5% for example, it can be 0%, 0.01%, 0.05%, , 0.1%, 0.2%, 0.5%, 1%, 1.5%, 2%, 2.5%, 3%, 3.5%, 4%, 4.5%, 5%, or the like, further preferably, 0.01%-1%.

In some embodiments of the present invention, additives (such as antioxidant, light stabilizer, ultraviolet absorber and the like) are preferably to be the following compounds:

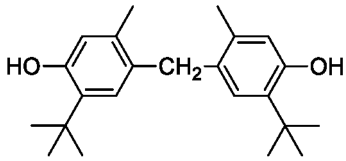

;

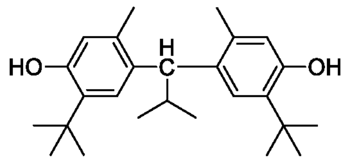

;

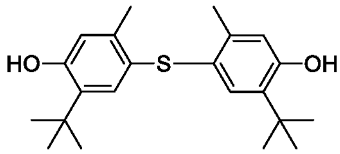

;

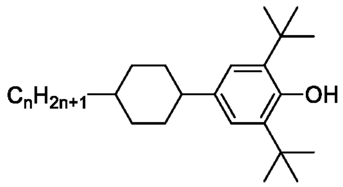

;

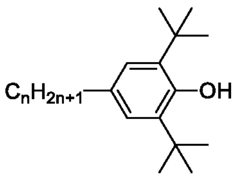

;

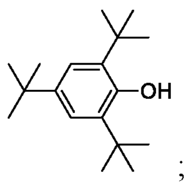

;

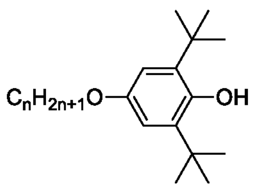

;

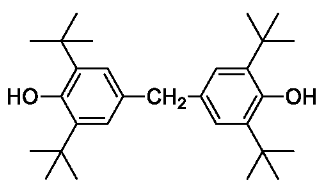

;

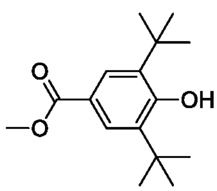

;

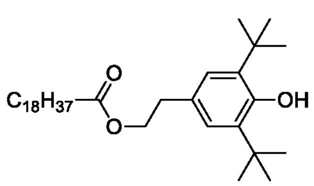

;

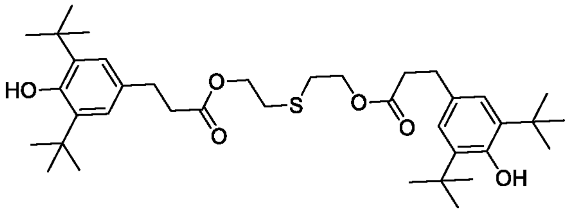
;

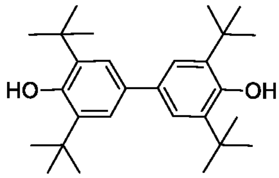
;

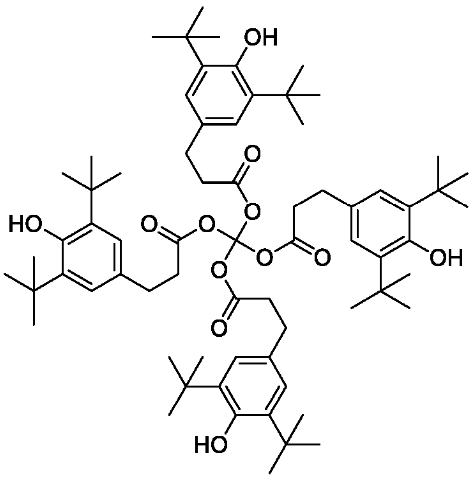
;

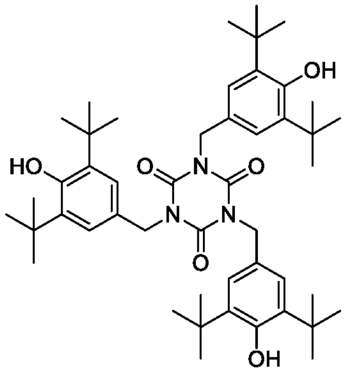
;

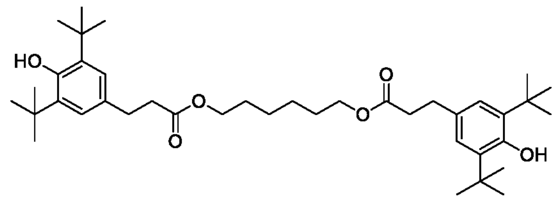
;

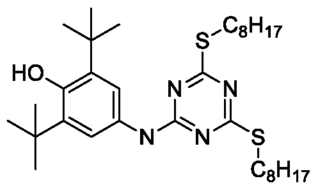
;

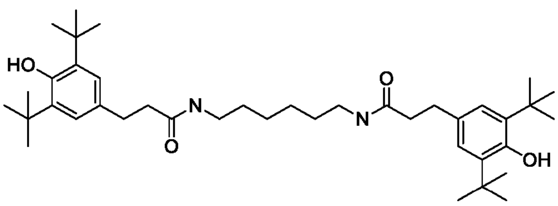
;

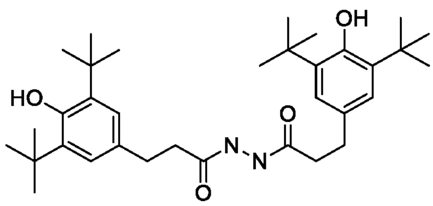
;

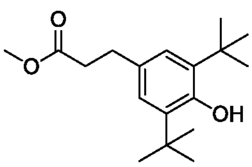
;

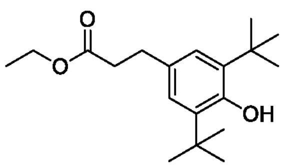
;

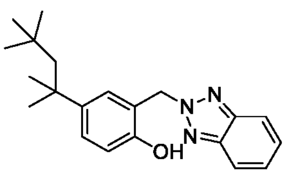
;

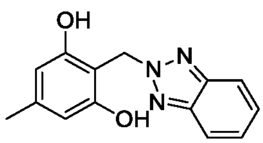
;

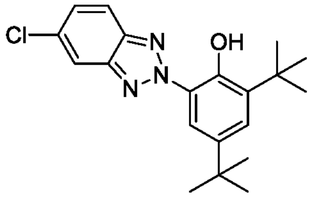 ;

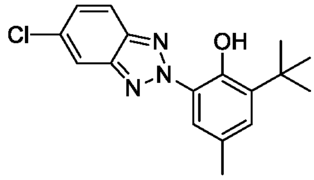 ;

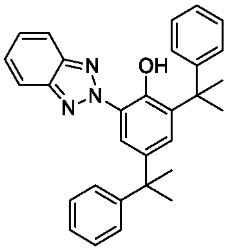 ;

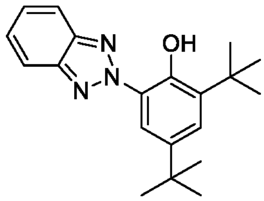 ;

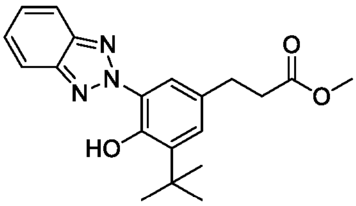 ;

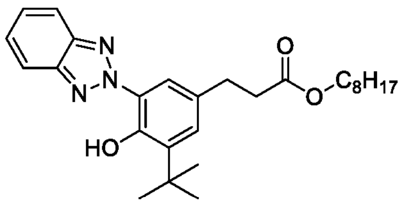 ;

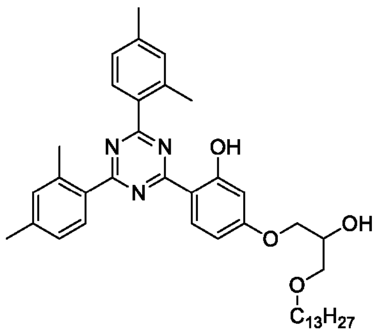 ;

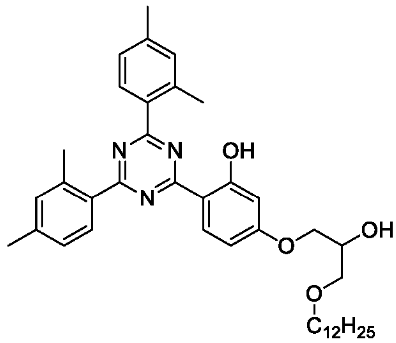 ;

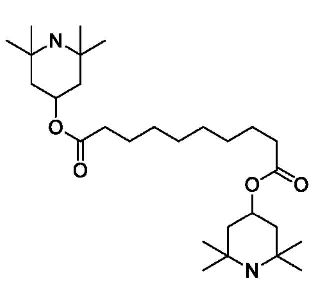 ;

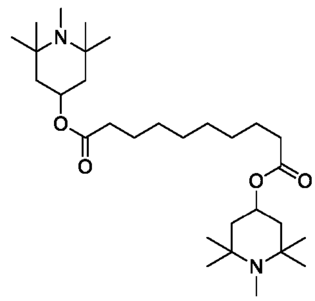 ;

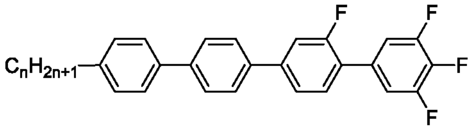 ;

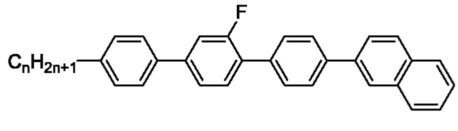 ;

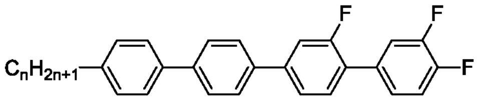;

wherein, n represents a positive integer of 1-12, for example, it can be 1, 2, 4, 6, 8, 9, 10, 11, 12 or the like.

In some embodiments of the present invention, the antioxidant is selected from any one or the combination of at least two of the following compounds:

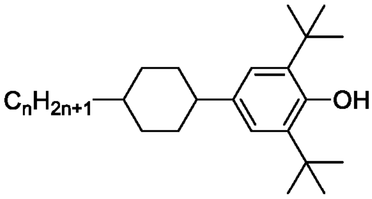, 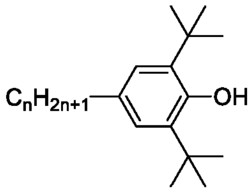, 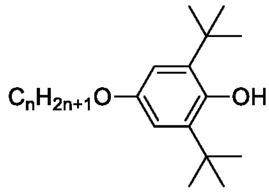.

In some embodiments of the present invention, in the liquid crystal composition, percentage by weight of the light stabilizer is 0%-5%, for example, it can be 0%, 0.01%, 0.05%, 0.1%, 0.2%, 0.5%, 1%, 1.5%, 2%, 2.5%, 3%, 3.5%, 4%, 4.5%, 5% or the like, further preferably, 0.01%-1%.

It should be noted that, for an easier calculation, in the present invention, the sum of the weight percentages of the compounds having different general formulas in the liquid crystal composition is one hundred percent, and the content of the additives is not counted within the total content of the liquid crystal composition, that is, the addition of the additives will result in the total content of the components in the liquid crystal composition being >100%.

Even in the absence of the polymerization initiator, the liquid crystal composition containing polymerizable compound of the present invention can polymerize as well. However, in order to promote polymerization, polymerization initiators can be included therein. The polymerization initiator exemplarily includes, but is not limited to: benzoin ethers, benzophenones, acetophenones, benzoin bis-ethers, acyl phosphine oxides and so forth.

In a second aspect, the present invention provides a liquid crystal display device, and the liquid crystal display device comprises a liquid crystal composition as described in the first aspect.

Compared with the prior art, the present invention has the following beneficial effects:

Via designing the components of the liquid crystal composition, the liquid crystal composition prepared in the present invention has a larger $K_{ave}$ value, a higher $\varepsilon_\perp$ and a lower LC scattering, and has an appropriate optical anisotropy and clearing point at the same time, which is suitable for display elements of VA, IPS or FFS type.

**Detailed Embodiments**

For an easier understanding of the present invention, the present invention enumerates the Examples below. It should be clear for the person skilled in the art that, the Examples are only for helping to understand the present invention, and shall not be seen as specific limitations on the present invention.

The sources of some components in the Examples and Comparative Examples are as follows:

For the convenience of the expression, in the following examples, the group structures of the liquid crystal composition are represented by the codes listed in Table 1:

Table 1

| Unit structure of group | Code | Name of group |
|---|---|---|
| 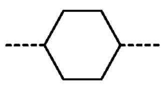 | C | 1,4-cyclohexylidene |
| 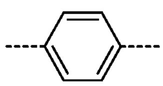 | P | 1,4-phenylene |
| 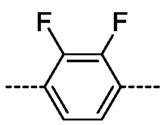 | W | 2,3-difluoro-1,4-phenylene |

(continued)

| Unit structure of group | Code | Name of group |
|---|---|---|
| 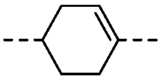 | L | 1, 4-cyclohexene |
| 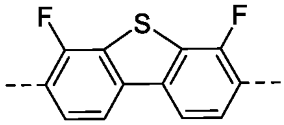 | B(S) | 4,6-difluoro-dibenzo[b,d]thiophene-3,7-diyl |
| 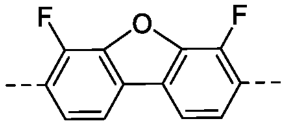 | B(O) | 4,6-difluoro-dibenzo[b,d]furan-3,7-diyl |
| 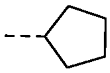 | C(5) | 1-cyclopentyl |
| 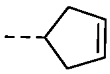 | C(5,V) | 1-cyclopentenyl |
| 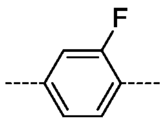 | G | 2-fluoro-1,4-phenylene |
| -O- | O | oxygen substituent |
| $-CH=CH-$ or $-CH=CH_2$ | V | ethenylene or ethenyl |
| 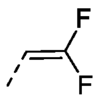 | V(2F) | difluoroenyl |
| -COO- | E | ester bridge bond |
| $-CH_2O-$ | 1O | methyleneoxy |
| $-CH_2CH_2-$ | 2 | ethyl bridge group |
| $-C_nH_{2n+1}$ or $-C_nH_{2n}-$ | n (n represents a positive integer of 1-12) | alkyl or alkylene |

In Table 1, broken lines represent the binding sites of the groups.

Take the compound with the following structural formula as an example:

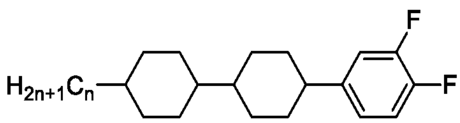

represented by the codes listed in Table 1, this structural formula can be expressed as nCCGF, n in the code represents the number of the carbon atoms of the alkyl on the left, for example, n is "3", meaning that the alkyl is $-C_3H_7$; C in the code represents cyclohexylidene, G represents 2-fluoro-1,4-phenylene, and F represents fluorine.

In the following Examples and Comparative Examples, the abbreviated codes of performance test items are shown in Table 2:

Table 2. The abbreviated codes of the performance test items

| Code of test items | Meaning |
|---|---|
| $\Delta n$ | optical anisotropy (589 nm, 20°C) |
| Cp | clearing point (nematic-isotropy phases transition temperature, °C) |
| $\varepsilon_{\perp}$ | dielectric constant perpendicular to the molecular axis |
| $K_{ave}$ | average elastic constant (20°C) |
| LC scattering | scattering coefficient |
| $n_o$ | ordinary ray refraction index |
| $n_e$ | extraordinary ray refraction index |

wherein, $\Delta n$, $n_o$, $n_e$: tested using an Abbe Refractometer under a sodium lamp (589 nm) light source at 20°C;
Cp (°C): tested by melting point apparatus quantitative method;
$\varepsilon_{\perp}$: test conditions: 20°C, 1 KHz, VA-type test cell with a cell gap of 6 μm;
$K_{ave}$: $K_{ave}=(K_{11}+K_{22}+K_{33})$, wherein $K_{11}$, $K_{22}$ and $K_{33}$ are obtained via testing the capacitance-voltage characteristic curves (C-V curves) of liquid crystal by LCR meter and VA test cell and calculating; test conditions: 6 μm VA test cell, V=0.1~20 V;

Lc scattering: $$\text{Scattering} = \frac{d \bullet \Delta n^2 \bullet (n_e + n_o)^2}{K_{ave}}.$$

The components used in the following Examples can either be synthesized by methods known in the art or be obtained commercially. Each of the obtained liquid crystal compositions is tested to meet the standards of electronic compound.

In the following Examples, the liquid crystal compositions are mixed according to proportion of each component (it is the general formula to which the component belong in the bracket at the end of the code of the component in each Example) and via conventional preparing methods (such as method of heating, ultrasonic processing, suspending and so forth) to obtain the liquid crystal compositions.

Comparative Example 1

The present Comparative Example provides a liquid crystal composition comprising components in the percentages by weight as shown in the table below, and the performance tests are carried out by filling the same into the two substrates of the liquid crystal display device:

| Code of component | Content | Test result of performance parameters | |
|---|---|---|---|
| 3PWO2 (N-13) | 5.5 | $\Delta n$ | 0.094 |
| 2CCWO2 (N-7) | 9.5 | Cp | 106 |
| 3CCWO2 (N-7) | 9 | $\varepsilon_{\perp}$ | 6.5 |
| 3CC1OWO2 (II-1) | 8 | $K_{ave}$ | 16.2 |
| 3CPWO2 (N-15) | 7 | LC scattering | 0.0178 |
| 3CLWO3 (N-10) | 9 | | |
| C(5)1OB(S)O2 | 4 | | |
| C(5)1OB(S)O4 | 4 | | |
| 3CCV (M-1) | 30 | | |
| 3CC2 (M-1) | 3 | | |
| 3CPO1 (M-2) | 3 | | |

(continued)

| Code of component | Content | Test result of performance parameters | |
|---|---|---|---|
| 3CCV1 (M-1) | 5 | | |
| 3CPPC2 (M-23) | 1.5 | | |
| VCCP1 (M-11) | 1.5 | | |

Comparative Example 2

The present Comparative Example provides a liquid crystal composition comprising components in the percentages by weight as shown in the table below, and the performance tests are carried out by filling the same into the two substrates of the liquid crystal display device:

| Code of component | Content | Test result of performance parameters | |
|---|---|---|---|
| 3PWO2 (N-13) | 9.5 | Δn | 0.093 |
| 2CCWO2 (N-7) | 8.5 | Cp | 106 |
| 3C2WO2 (II-4) | 10 | $\varepsilon_{\perp}$ | 6 |
| 4CCWO2 (N-7) | 10 | $K_{ave}$ | 16.1 |
| 3CPWO2 (N-15) | 9 | Lc scattering | 0.0175 |
| 3CLWO3 (N-10) | 9 | | |
| 3CCV (M-1) | 30 | | |
| 3CCP1 (M-11) | 4 | | |
| 3CC1OC3 (M-21) | 5 | | |
| 3PPO2 (M-4) | 2 | | |
| 3CGPC2 (M-24) | 1.5 | | |
| 3CPP2 (M-13) | 1.5 | | |

Example 1

The present Example provides a liquid crystal composition comprising components in the percentages by weight as shown in the table below, and the performance tests are carried out by filling the same into the two substrates of the liquid crystal display device:

| Code of component | Content | Test result of performance parameters | |
|---|---|---|---|
| 3PWO2 (N-13) | 5.5 | Δn | 0.093 |
| 2CCWO2 (N-7) | 9.5 | Cp | 107 |
| 3CCWO2 (N-7) | 9 | $\varepsilon_{\perp}$ | 6.9 |
| 3CC1OWO2 (II-1) | 8 | $K_{ave}$ | 17.4 |
| 3CPWO2 (N-15) | 7 | Lc scattering | 0.016 |
| 3CLWO3 (N-10) | 9 | | |
| C(5,V)1OB(S)O2 (I-1) | 4 | | |
| C(5,V)1OB(S)O4 (I-1) | 4 | | |
| 3CCV (M-1) | 30 | | |
| 3CC2 (M-1) | 3 | | |
| 3CPO1 (M-2) | 3 | | |

(continued)

| Code of component | Content | Test result of performance parameters | |
|---|---|---|---|
| 3CCV1 (M-1) | 5 | | |
| 3CPPC2 (M-23) | 1.5 | | |
| VCCP1 (M-11) | 1.5 | | |

It can be seen from the comparison of Example 1 and Comparative Examples 1-2 that the liquid crystal composition of the present invention, via the optimization on the structures of the compound of general formula I and the compound of general formula II, the liquid crystal composition of the present invention has an appropriate optical anisotropy, an appropriate clearing point, a larger $\varepsilon_{\perp}$, a larger $K_{ave}$ value and a smaller scattering coefficient (the ratios has been decreased by 11%-9%), and the contrast rate is correspondingly improved by 11%-9%.

Example 2

The present Example provides a liquid crystal composition comprising components in the percentages by weight as shown in the table below, and the performance tests are carried out by filling the same into the two substrates of the liquid crystal display device:

| Code of component | Content | Test result of performance parameters | |
|---|---|---|---|
| 3PWO2 (N-13) | 5.5 | $\Delta n$ | 0.093 |
| 2CCWO2 (N-7) | 9.5 | Cp | 106 |
| 3CCWO2 (N-7) | 9 | $\varepsilon_{\perp}$ | 6.7 |
| 3CC2WO2 (II-2) | 8 | $K_{ave}$ | 18 |
| 3CPWO2 (N-15) | 7 | Lc scattering | 0.0157 |
| 3C1OWO2 (II-3) | 9 | | |
| C(5,V)1OB(S)O2 (I-1) | 4 | | |
| C(5,V)1OB(S)O4 (I-1) | 4 | | |
| 3CCV (M-1) | 30 | | |
| 3CC2 (M-1) | 3 | | |
| 3CPO1 (M-2) | 3 | | |
| 3CCV1 (M-1) | 5 | | |
| 3CPPC2 (M-23) | 1.5 | | |
| VCCP1 (M-11) | 1.5 | | |

Example 3

The present Example provides a liquid crystal composition comprising components in the percentages by weight as shown in the table below, and the performance tests are carried out by filling the same into the two substrates of the liquid crystal display device:

| Code of component | Content | Test result of performance parameters | |
|---|---|---|---|
| 3PWO2 (N-13) | 3.5 | $\Delta n$ | 0.093 |
| 2CCWO2 (N-7) | 8.5 | Cp | 106 |
| 3C2WO2 (II-4) | 10 | $\varepsilon_{\perp}$ | 7.2 |
| 3CC1OWO2 (II-1) | 10 | $K_{ave}$ | 19.1 |
| 3CPWO2 (N-15) | 5 | Lc scattering | 0.0148 |

(continued)

| Code of component | Content | Test result of performance parameters | |
|---|---|---|---|
| 3CLWO3 (N-10) | 9 | | |
| C(5,V)1OB(S)O2 (I-1) | 5 | | |
| C(5,V)1OB(S)O4 (I-1) | 5 | | |
| 3CCV (M-1) | 30 | | |
| 3CCP1 (M-11) | 4 | | |
| 3CC1OC3 (M-21) | 5 | | |
| 3PPO2 (M-4) | 2 | | |
| 3CGPC2 (M-24) | 1.5 | | |
| 3CPP2 (M-13) | 1.5 | | |

Example 4

The present Example provides a liquid crystal composition comprising components in the percentages by weight as shown in the table below, and the performance tests are carried out by filling the same into the two substrates of the liquid crystal display device:

| Code of component | Content | Test result of performance parameters | |
|---|---|---|---|
| 2C2WO2 (II-4) | 5 | $\Delta n$ | 0.09 |
| 3C2WO2 (II-4) | 5 | Cp | 105 |
| 2CC2WO2 (II-2) | 8 | $\varepsilon_{\perp}$ | 8.2 |
| 3CC2WO4 (II-2) | 8 | $K_{ave}$ | 22.4 |
| 3CC2WO2 (II-2) | 8 | Lc scattering | 0.0121 |
| 4CC2WO3 (II-2) | 7 | | |
| C(5,V)1OB(S)O1 (I-1) | 5 | | |
| C(5,V)1OB(S)O2 (I-1) | 5 | | |
| C(5,V)1OB(S)O3 (I-1) | 5 | | |
| C(5,V)1OB(O)O4 (I-1) | 5 | | |
| 3CC1OWO2 (II-1) | 5 | | |
| 3CCV (M-1) | 27 | | |
| 4CC3 (M-1) | 4 | | |
| V2CCP1 (M-11) | 2 | | |
| 3CCEPC3 (M-27) | 1 | | |

Example 5

The present Example provides a liquid crystal composition comprising components in the percentages by weight as shown in the table below, and the performance tests are carried out by filling the same into the two substrates of the liquid crystal display device:

| Code of component | Content | Test result of performance parameters | |
|---|---|---|---|
| 3CWO2 (N-2) | 2 | $\Delta n$ | 0.09 |
| 3C1OWO2 (II-3) | 8 | Cp | 105 |

(continued)

| Code of component | Content | Test result of performance parameters | |
|---|---|---|---|
| 2CC1OWO2 (II-1) | 12 | $\varepsilon_{\perp}$ | 8.7 |
| 3CC1OWO2 (II-1) | 8 | $K_{ave}$ | 21 |
| 2CC2WO2 (II-2) | 8 | Lc scattering | 0.0126 |
| 3CC2WO2 (II-2) | 10 | | |
| 4CC2WO3 (II-2) | 5 | | |
| 2OB(O)OV(2F) (B-1-1) | 3 | | |
| 4OB(S)OV(2F) (B-1-1) | 2 | | |
| C(5,V)1OB(S)O2 (I-1) | 2 | | |
| C(5,V)1OB(O)O4 (I-1) | 4 | | |
| 3CCV (M-1) | 32 | | |
| 3CPP2V (M-13) | 2 | | |
| 3CPP2V1 (M-13) | 2 | | |

Example 6

The present Example provides a liquid crystal composition comprising components in the percentages by weight as shown in the table below, and the performance tests are carried out by filling the same into the two substrates of the liquid crystal display device:

| Code of component | Content | Test result of performance parameters | |
|---|---|---|---|
| 2C1OWO2 (II-3) | 4.5 | $\Delta n$ | 0.089 |
| 3C1OWO2 (II-3) | 5 | Cp | 105 |
| 2CC1OWO2 (II-1) | 11 | $\varepsilon_{\perp}$ | 9.3 |
| 3CC1OWO2 (II-1) | 10 | $K_{ave}$ | 20.9 |
| 4CC1OWO2 (II-1) | 5 | Lc scattering | 0.0126 |
| 3C2WO2 (II-4) | 5 | | |
| 2CC2WO2 (II-2) | 7 | | |
| 3CC2WO2 (II-2) | 8.5 | | |
| C(5,V)1OB(S)O3 (I-1) | 4 | | |
| C(5,V)1OB(S)O2 (I-1) | 4 | | |
| C(5,V)1OB(O)O4 (I-1) | 4 | | |
| 3CCV (M-1) | 30 | | |
| 3CCP1 (M-13) | 2 | | |

Example 7

The present Example provides a liquid crystal composition comprising components in the percentages by weight as shown in the table below, and the performance tests are carried out by filling the same into the two substrates of the liquid crystal display device:

| Code of component | Content | Test result of performance parameters | |
|---|---|---|---|
| 3C1OWO2 (II-3) | 11 | $\Delta n$ | 0.091 |

(continued)

| Code of component | Content | Test result of performance parameters | |
|---|---|---|---|
| 2CC1OWO2 (II-1) | 10 | Cp | 105 |
| 3CC1OWO2 (II-1) | 10 | $\varepsilon_\perp$ | 8.6 |
| 1VCPWO2 (N-15) | 5 | $K_{ave}$ | 19.3 |
| 3PPWO2 (N-17) | 2 | Lc scattering | 0.014 |
| 3CLWO2 (N-10) | 9 | | |
| 3LWO2 (N-3) | 5 | | |
| C(5,V)1OB(S)O2 (I-1) | 5 | | |
| C(5,V)1OB(S)O4 (I-1) | 5 | | |
| 3CCV (M-1) | 28 | | |
| 3CPPO2 (M-13) | 3 | | |
| 3CC2 (M-1) | 4 | | |
| 3CPPC2 (M-23) | 1.5 | | |
| V2CCP1 (M-11) | 1.5 | | |

Example 8

The present Example provides a liquid crystal composition comprising components in the percentages by weight as shown in the table below, and the performance tests are carried out by filling the same into the two substrates of the liquid crystal display device:

| Code of component | Content | Test result of performance parameters | |
|---|---|---|---|
| 3PWO2 (N-13) | 7.5 | $\Delta n$ | 0.093 |
| 2CCWO2 (N-7) | 9.5 | Cp | 106 |
| 3CCWO2 (N-7) | 6 | $\varepsilon_\perp$ | 6.7 |
| 3CC1OWO2 (II-1) | 6 | $K_{ave}$ | 17.8 |
| 2CC2WO2 (II-2) | 5 | Lc scattering | 0.0159 |
| 3CPWO2 (N-15) | 9 | | |
| 3CLWO3 (N-10) | 9 | | |
| 2OB(S)OV(2F) (I-9) | 2 | | |
| C(5,V)1OB(S)O2 (I-1) | 2 | | |
| 3CCV (M-1) | 31 | | |
| 3CCV1 (M-1) | 10 | | |
| VCCP1 (M-11) | 3 | | |

Example 9

The present Example provides a liquid crystal composition comprising components in the percentages by weight as shown in the table below, and the performance tests are carried out by filling the same into the two substrates of the liquid crystal display device:

| Code of component | Content | Test result of performance parameters | |
|---|---|---|---|
| 3PWO2 (N-13) | 7.5 | $\Delta n$ | 0.09 |

(continued)

| Code of component | Content | Test result of performance parameters | |
|---|---|---|---|
| 2CC1OWO2 (II-1) | 5.5 | Cp | 104 |
| 2CC2WO2 (II-2) | 6 | $\varepsilon_{\perp}$ | 7 |
| 3CC1OWO2 (II-1) | 10 | $K_{ave}$ | 18.3 |
| 3CC2WO2 (II-2) | 10 | Lc scattering | 0.0144 |
| 3CPWO2 (N-15) | 4 | | |
| 3CLWO3 (N-10) | 9 | | |
| 2OB(S)OV(2F) (I-9) | 2 | | |
| C(5,V)1OB(S)O4 (I-1) | 2 | | |
| 3CCV (M-1) | 32 | | |
| 3CCV1 (M-1) | 10 | | |
| 2CPP1 (M-13) | 2 | | |

Example 10

The present Example provides a liquid crystal composition comprising components in the percentages by weight as shown in the table below, and the performance tests are carried out by filling the same into the two substrates of the liquid crystal display device:

| Code of component | Content | Test result of performance parameters | |
|---|---|---|---|
| 3C2WO2 (II-4) | 4.5 | $\Delta n$ | 0.089 |
| 2C1OWO2 (II-3) | 5 | Cp | 103 |
| 2CC1OWO2 (II-1) | 11 | $\varepsilon_{\perp}$ | 7.5 |
| 3CC1OWO2 (II-1) | 7 | $K_{ave}$ | 19.8 |
| 2CC2WO2 (II-2) | 7 | Lc scattering | 0.013 |
| 3CC2WO2 (II-2) | 8.5 | | |
| 3CLWO3 (N-10) | 5 | | |
| 2OB(S)OV(2F) (I-9) | 4 | | |
| C(5,V)1OB(S)O4 (I-1) | 4 | | |
| 3CCV (M-1) | 33 | | |
| 1PP2V (M-4) | 2 | | |
| 5CC2 (M-1) | 7 | | |
| 3CCP1 (M-11) | 2 | | |

Example 11

The present Example provides a liquid crystal composition comprising components in the percentages by weight as shown in the table below, and the performance tests are carried out by filling the same into the two substrates of the liquid crystal display device:

| Code of component | Content | Test result of performance parameters | |
|---|---|---|---|
| 3C2WO2 (II-4) | 2 | $\Delta n$ | 0.09 |
| 2C1OWO2 (II-3) | 3 | Cp | 102 |

(continued)

| Code of component | Content | Test result of performance parameters | |
|---|---|---|---|
| 2CC1OWO2 (II-1) | 10 | $\varepsilon_{\perp}$ | 8.1 |
| 2CC2WO2 (II-2) | 7 | $K_{ave}$ | 20.8 |
| 3CC2WO2 (II-2) | 8 | Lc scattering | 0.0127 |
| 4CC2WO3 (II-2) | 5 | | |
| 2OB(S)OV(2F) (I-9) | 5 | | |
| 4OB(O)OV(2F) (I-9) | 5 | | |
| C(5,V)1OB(S)O2 (I-1) | 5.5 | | |
| C(5,V)1OB(O)O4 (I-1) | 5.5 | | |
| 3CCV (M-1) | 35 | | |
| 3CPO1 (M-2) | 2 | | |
| 4CC3 (M-1) | 7 | | |

Example 12

The present Example provides a liquid crystal composition comprising components in the percentages by weight as shown in the table below, and the performance tests are carried out by filling the same into the two substrates of the liquid crystal display device:

| Code of component | Content | Test result of performance parameters | |
|---|---|---|---|
| 2C2WO2 (II-4) | 8 | $\Delta n$ | 0.088 |
| 3C1OWO2 (II-3) | 8 | Cp | 103 |
| 2CC1OWO2 (II-1) | 13 | $\varepsilon_{\perp}$ | 8.3 |
| 2CC2WO2 (II-2) | 8 | $K_{ave}$ | 21 |
| 3CC2WO2 (II-2) | 10 | Lc scattering | 0.012 |
| 4CC2WO3 (II-2) | 5 | | |
| 2OB(O)OV(2F) (I-9) | 4 | | |
| 4OB(S)OV(2F) (I-9) | 4 | | |
| C(5,V)1OB(S)O2 (I-1) | 3 | | |
| C(5,V)1OB(O)O4 (I-1) | 4 | | |
| 3CCV (M-1) | 30 | | |
| 4CC3 (M-1) | 3 | | |

Example 13

The present Example provides a liquid crystal composition comprising components in the percentages by weight as shown in the table below, and the performance tests are carried out by filling the same into the two substrates of the liquid crystal display device:

| Code of component | Content | Test result of performance parameters | |
|---|---|---|---|
| 3C2WO2 (II-4) | 4.5 | $\Delta n$ | 0.089 |
| 2C1OWO2 (II-3) | 3 | Cp | 103 |
| 2CC1OWO2 (II-1) | 11 | $\varepsilon_{\perp}$ | 7.9 |

(continued)

| Code of component | Content | Test result of performance parameters | |
|---|---|---|---|
| 3CC1OWO2 (II-1) | 8 | $K_{ave}$ | 20.3 |
| 2CC2WO2 (II-2) | 7 | Lc scattering | 0.0127 |
| 3CC2WO2 (II-2) | 8.5 | | |
| 2OB(O)OV(2F) (I-9) | 4 | | |
| 4OB(S)OV(2F) (I-9) | 4 | | |
| C(5,V)1OB(S)O2 (I-1) | 3 | | |
| C(5,V)1OB(O)O4 (I-1) | 3 | | |
| 3CCV (M-1) | 35 | | |
| 4CC3 (M-1) | 7.5 | | |
| 3CGPC3 (M-24) | 1.5 | | |

It can be seen from the above contents that via designing the components of the liquid crystal composition, the liquid crystal composition prepared in the present invention has a larger $K_{ave}$ value, a higher $\varepsilon_{\perp}$ and a lower LC scattering ((the ratios has been decreased by 9%-48%)), and has an appropriate optical anisotropy and clearing point at the same time, which makes the liquid crystal display device containing the same have a better transmission and contrast rate, and suitable for display elements of VA, IPS or FFS type.

The applicant declares that the liquid crystal composition and liquid crystal display device of the present invention is illustrated by the above Examples, but the present invention is not limited to the above Examples, that is, it does not mean that the implement of the present application must rely on the above Examples. It shall be clear to the person skilled in the art that any improvements of the present invention, equivalent replacements of the raw materials used in the present invention, the additions of any auxiliary components, the selection of specific methods or the like all fall into the protection scope and the disclosure scope of the present invention.

## Industrial Applicability

The liquid crystal composition involved in the present invention can be applied to the liquid crystal field.

## Claims

1. A liquid crystal composition, **characterized in that** the liquid crystal composition comprises at least one compound of general formula I and at least one compound of general formula II:

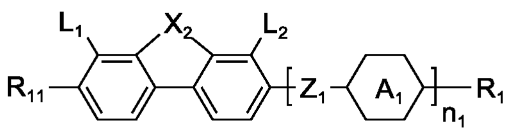

I;

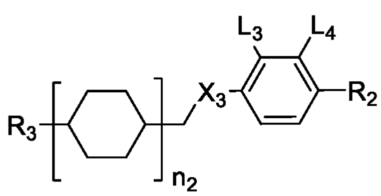

II,

wherein, $R_1$ represents any one of $C_{1-12}$ halogenated or unhalogenated linear alkyl, $C_{3-12}$ halogenated or unhalogenated branched alkyl,

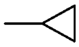, 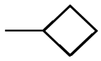

or

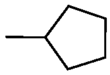;

wherein, one or at least two nonadjacent -$CH_2$- group in the $C_{1-12}$ halogenated or unhalogenated linear alkyl and $C_{3-12}$ halogenated or unhalogenated branched alkyl can each be independently replaced by -CH=CH-, -C≡C-, -O-, -CO-, -CO-O- or -O-CO- group;
$R_{11}$ represents

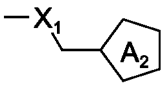 or 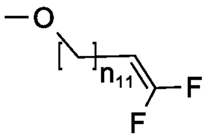,

$X_1$ represents -O- or -S-, $n_{11}$ represents 0, 1, 2, 3 or 4;
ring

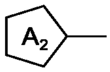

represents

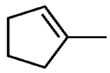, 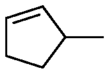 or 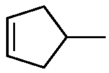;

$R_2$ and $R_3$ each independently represents any one of $C_{1-12}$ linear alkyl, $C_{3-12}$ branched alkyl,

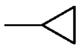, 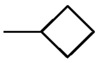 or 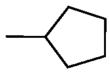;

wherein, one or at least two nonadjacent -$CH_2$- group in the $C_{1-12}$ linear alkyl and $C_{3-12}$ branched alkyl can each be independently replaced by -CH=CH-, -C≡C-, -O-, -CO-, -CO-O- or -O-CO- group;
ring

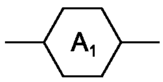

represents

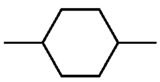, 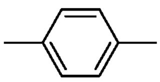 or 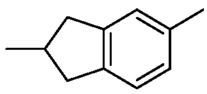,

wherein one or at least two -$CH_2$- in

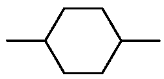 and 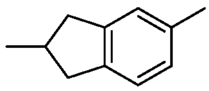

can each be independently replaced by -O-, one or at least two single bond in the rings can each be independently replaced by double bond; one or at least two -H on

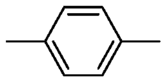

and

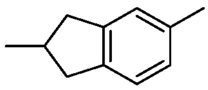

can each be independently replaced by -F, -Cl, -CN, $-CH_3$ or $-OCH_3$, one or at least two -CH= in the rings can each be independently replaced by -N=;

$L_1$-$L_4$ each independently represents halogen atom;

$X_2$ represents -O- or -S-; $X_3$ represents -O- or $-CH_2-$;

$Z_1$ represents single bond, -CO-O-, -O-CO-, $-CH_2O-$, $-OCH_2-$, -CH=CH-, -C≡C-, $-CH_2CH_2-$, $-CF_2CF_2-$, $-(CH_2)_4-$, $-CF_2O-$ or $-OCF_2-$;

$n_1$ represents 0, 1 or 2, when $n_1$ represents 2, ring

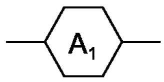

can be the same or different, $Z_1$ can be the same or different; and

$n_2$ represents 1 or 2.

2. The liquid crystal composition according to claim 1, **characterized in that** the compound of general formula I is any one or the combination of at least two of the compounds with the following structures:

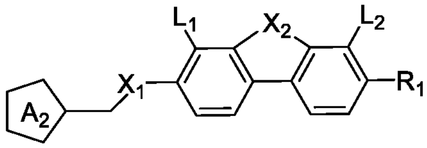

I-1;

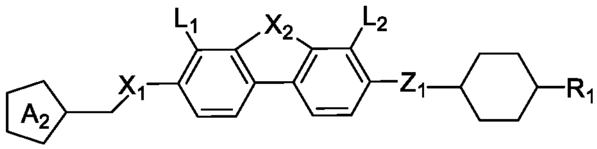

I-2;

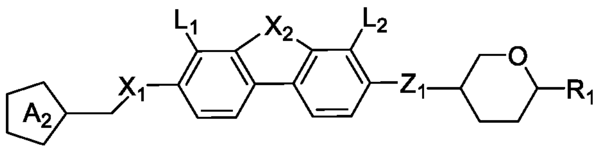

I-3;

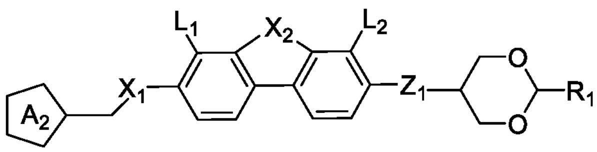

I-4;

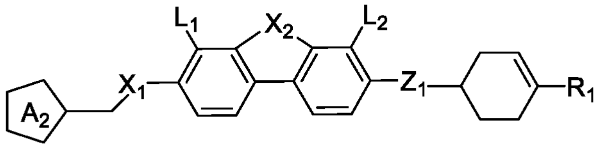

I-5;

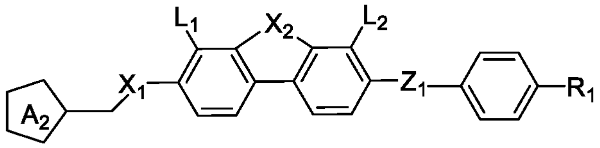

I-6;

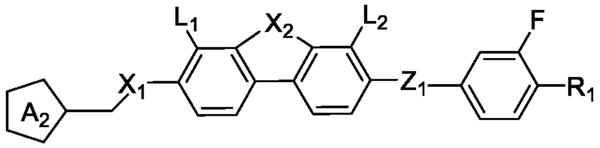

I-7;

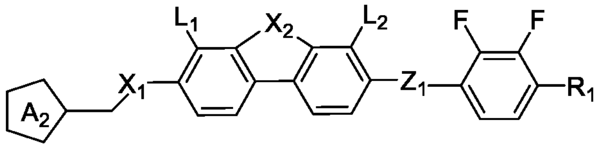

I-8;

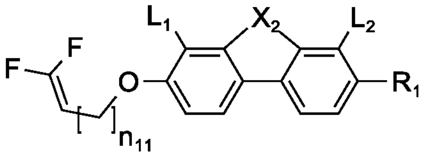

I-9;

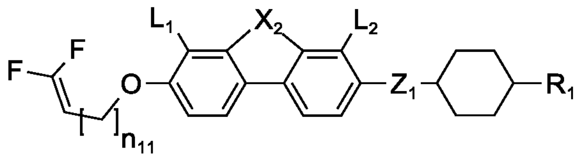

I-10;

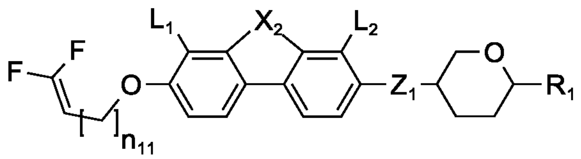

I-11;

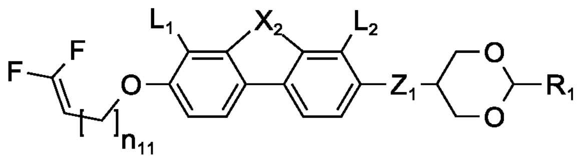

I-12;

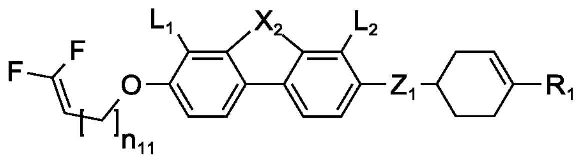

I-13;

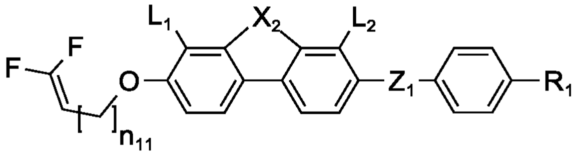 I-14;

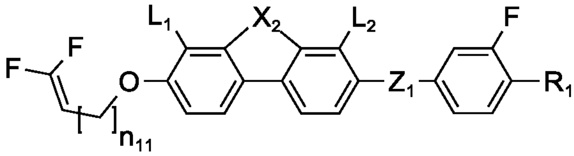 I-15;

and

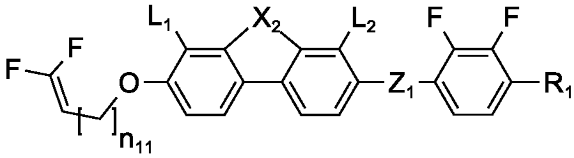 I-16,

wherein, ring

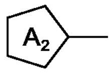

,

$X_1$, $X_2$, $L_1$, $L_2$, $Z_1$ and $n_{11}$ have the same protection scopes as those in claim 1;
preferably, ring

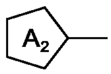

represents

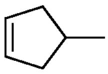

;

preferably, $L_1$ and $L_2$ both represent fluorine atom;
preferably, the compound of general formula I is the compound of general formula I-1 or the compound of general formula I-9;
preferably, in the liquid crystal composition, percentage by weight of the compound of general formula I is 0.1%~35%, further preferably, 2%~25%.

3. The liquid crystal composition according to claim 1 or 2, **characterized in that** the compound of general formula II is any one or the combination of at least two of the compounds with the following structures:

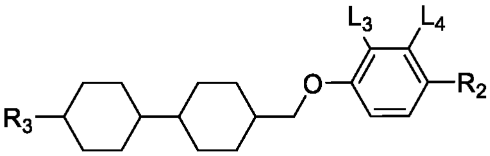 II-1;

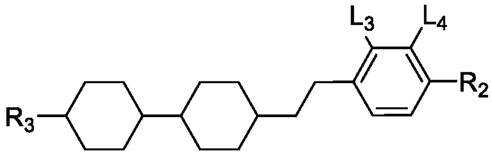

II-2;

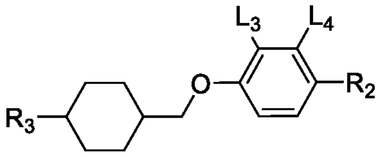

II-3;

and

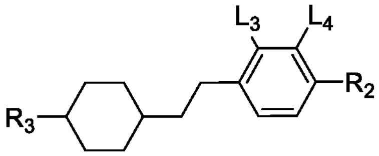

II-4;

preferably, $L_3$ and $L_4$ both represent fluorine atom;
preferably, the compound of general formula II comprises the compound of general formula II-2 and/or the compound of general formula II-4;
preferably, the liquid crystal composition comprises at least two compounds of general formula II;
preferably, in the liquid crystal composition, percentage by weight of the compound of general formula II is 0.1% ~60%, further preferably, 8%~60%.

4. The liquid crystal composition according to any one of claims 1-3, **characterized in that** the liquid crystal composition further comprises at least one compound of general formula N:

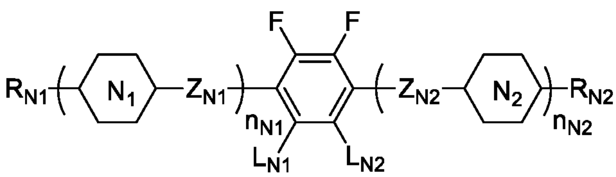

N,

wherein, $R_{N1}$ and $R_{N2}$ each independently represents $C_{1-12}$ linear alkyl, $C_{3-12}$ branched alkyl,

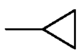, 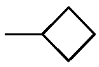 or 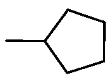,

wherein, one or any more than two nonadjacent $-CH_2-$ in the $C_{1-12}$ linear alkyl and $C_{3-12}$ branched alkyl can each be independently replaced by -CH=CH-, -C≡C-, -O-, -CO-, -CO-O- or -O-CO-;
ring

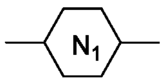

and ring

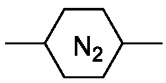

each independently represents

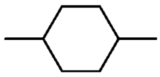 or 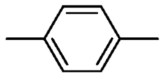,

wherein one or at least two $-CH_2-$ in

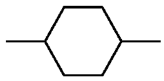

can be replaced by -O-, one or at least two single bond in the rings can be replaced by double bond; one or at least two -H on

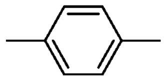

can each be independently replaced by -F, -Cl or -CN, one or at least two -CH= in the rings can be replaced by -N=;
$Z_{N1}$ and $Z_{N2}$ each independently represents single bond, -CO-O-, -O-CO-, -CH=CH-, -C≡C-, $-CF_2CF_2-$, $-(CH_2)_4-$, $-CF_2O-$ or $-OCF_2-$;
$L_{N1}$ and $L_{N2}$ each independently represents -H, $C_{1-3}$ alkyl, or halogen atom; and
$n_{N1}$ represents 0, 1, 2 or 3, $n_{N2}$ represents 0 or 1, and $0 \leq n_{N1}+n_{N2} \leq 3$, wherein, when $n_{N1}$ represents 2 or 3, ring

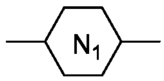

can be the same or different, $Z_{N1}$ can be the same or different.

5. The liquid crystal composition according to claim 4, **characterized in that** the compound of general formula N is any one or the combination of at least two of the compounds with the following structures:

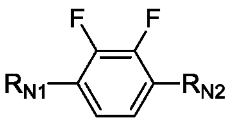 N-1;

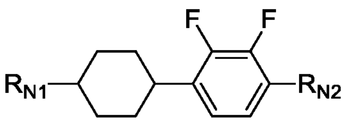 N-2;

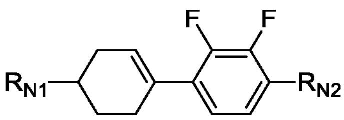 N-3;

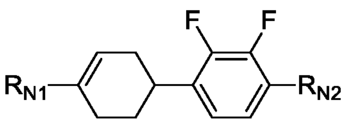 N-4;

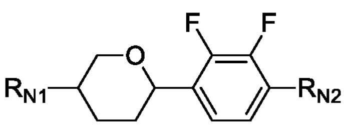 N-5;

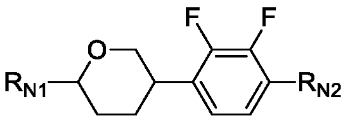

N-6;

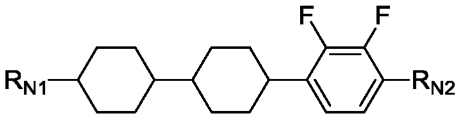

N-7;

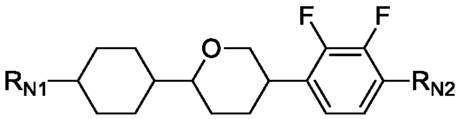

N-8;

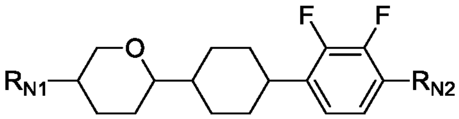

N-9;

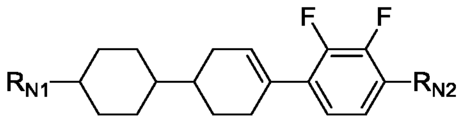

N-10;

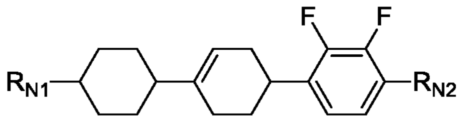

N-11;

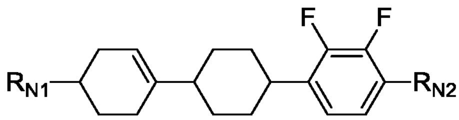

N-12;

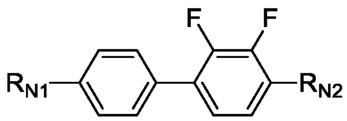

N-13;

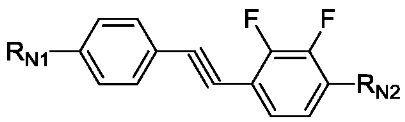

N-14;

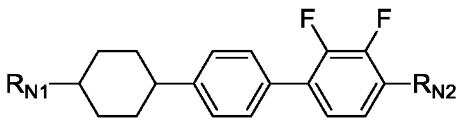

N-15;

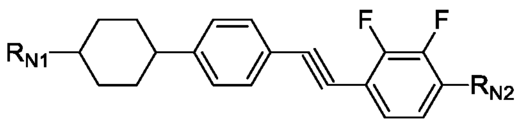

N-16;

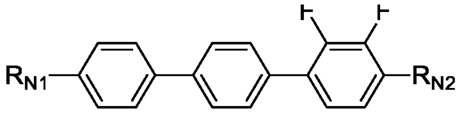

N-17;

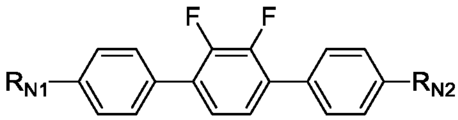

N-18;

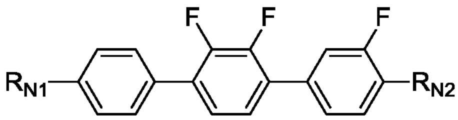

N-19;

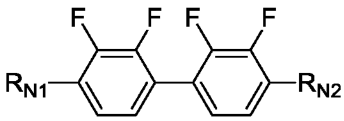

N-20;

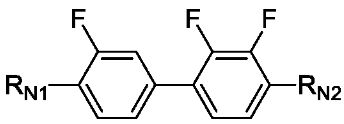

N-21;

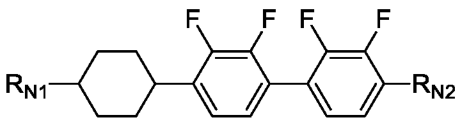

N-22;

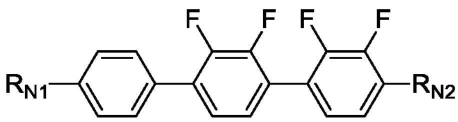

N-23;

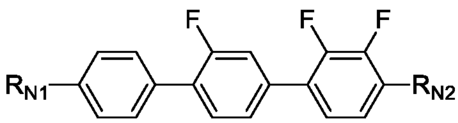

N-24;

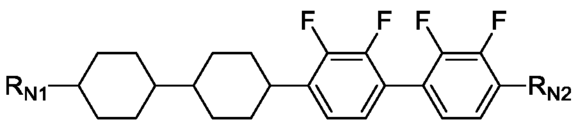

N-25;

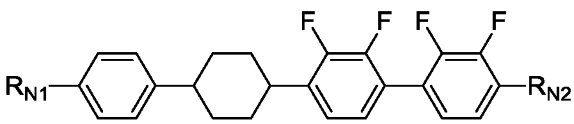

N-26;

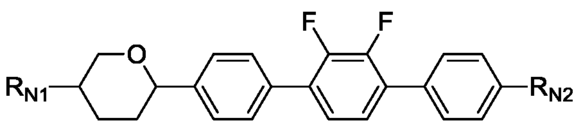

N-27;

and

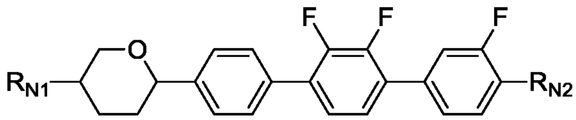

N-28;

preferably, the compound of general formula N is any one or the combination of at least two of the compounds with the following structures:

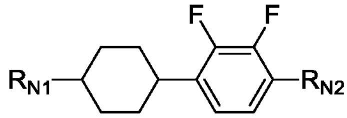

N-2;

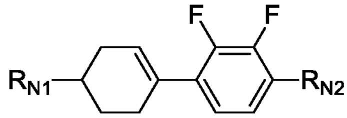

N-3;

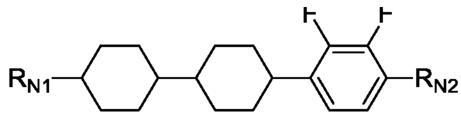

N-7;

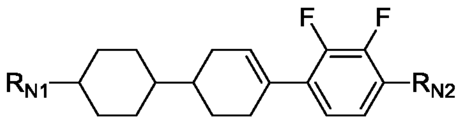

N-10;

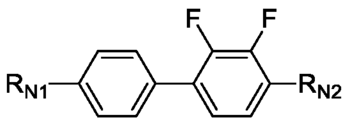

N-13;

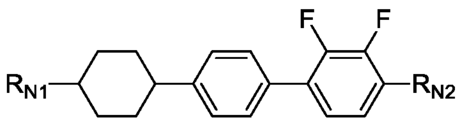

N-15;

and

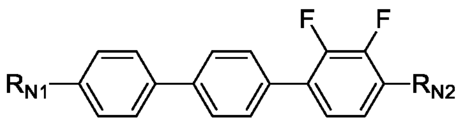

N-17;

preferably, in the liquid crystal composition, percentage by weight of the compound of general formula N is 0.1% ~50%, further preferably, 2%~45%.

6. The liquid crystal composition according to any one of claims 1-5, **characterized in that** the liquid crystal composition further comprises at least one compound of general formula M:

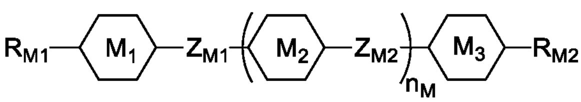

M,

wherein, $R_{M1}$ and $R_{M2}$ each independently represents $C_{1-12}$ linear alkyl, $C_{3-12}$ branched alkyl,

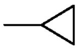, 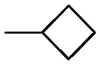 or 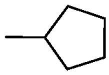,

wherein, one or at least two nonadjacent $-CH_2-$ in the $C_{1-12}$ linear alkyl or $C_{3-12}$ branched alkyl can each be independently replaced by -CH=CH-, -C≡C-, -O-, -CO-, -CO-O- or -O-CO-;
ring

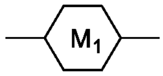,

ring

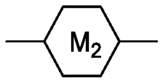 and 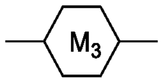

each independently represents

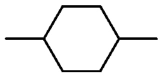 or 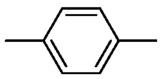,

wherein, one or at least two $-CH_2-$ in

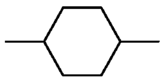

can be replaced by -O-, one or at least two single bond in the rings can be replaced by double bond; at most one -H on

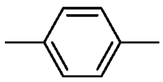

can be replaced by halogen atom;
$Z_{M1}$ and $Z_{M2}$ each independently represents single bond, -CO-O-, -O-CO-, $-CH_2O-$, $-OCH_2-$, -C≡C-, -CH=CH-, $-CH_2CH_2-$ or $-(CH_2)_4-$; and
$n_M$ represents 0, 1 or 2, wherein, when $n_M$ represents 2, ring

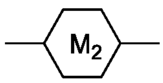

can be the same or different, $Z_{M2}$ can be the same or different.

7. The liquid crystal composition according to claim 6, **characterized in that** the compound of general formula M is any one or the combination of at least two of the compounds with the following structures:

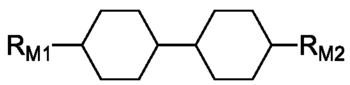 M-1;

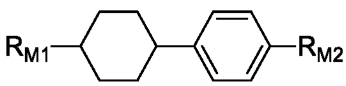 M-2;

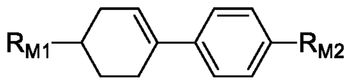
M-3;

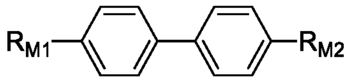
M-4;

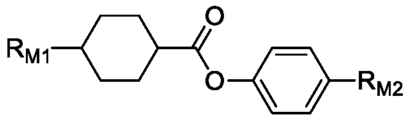
M-5;

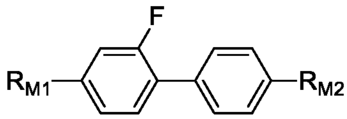
M-6;

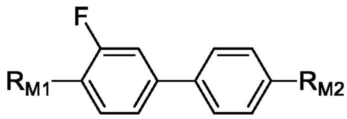
M-7;

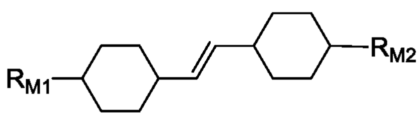
M-8;

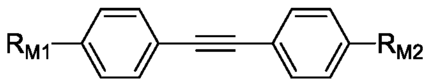
M-9;

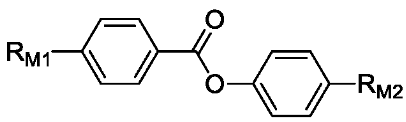
M-10;

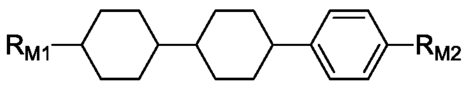
M-11;

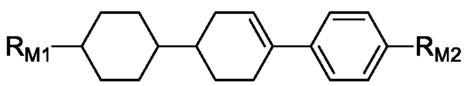
M-12;

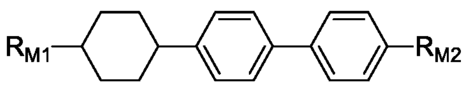
M-13;

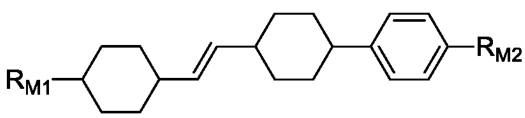
M-14;

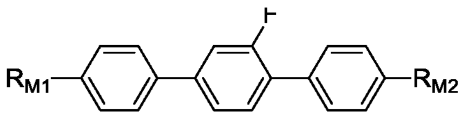
M-15;

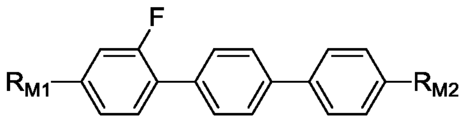

M-16;

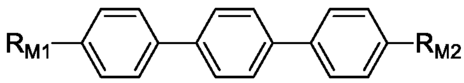

M-17;

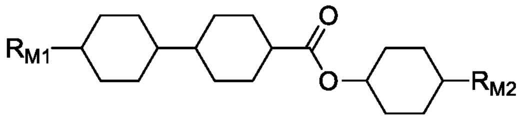

M-18;

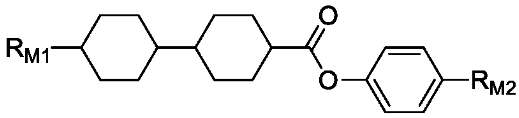

M-19;

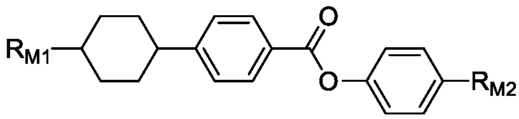

M-20;

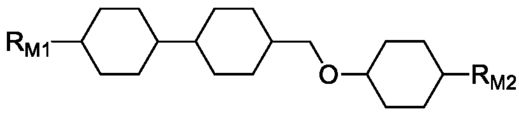

M-21;

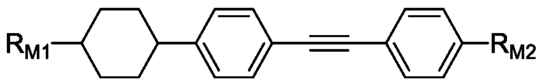

M-22;

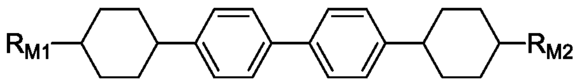

M-23;

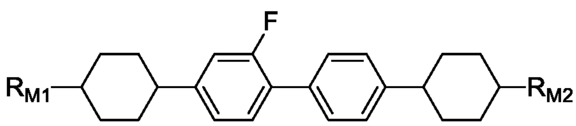

M-24;

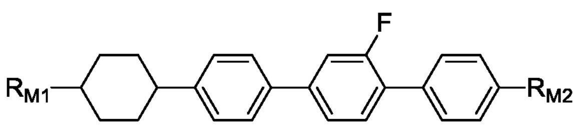

M-25;

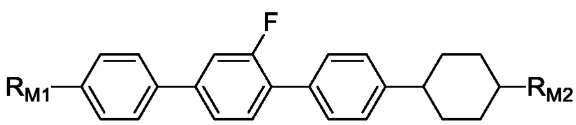

M-26;

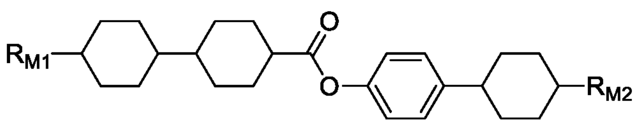

M-27;

and

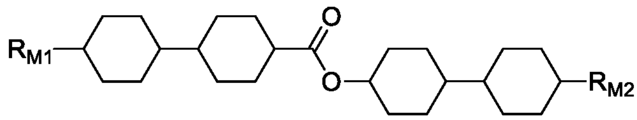 M-28;

preferably, the compound of general formula M is any one or the combination of at least two of the compounds with the following structures:

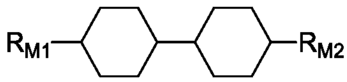 M-1;

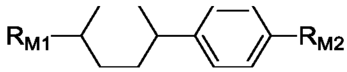 M-2;

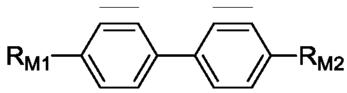 M-4;

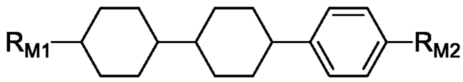 M-11;

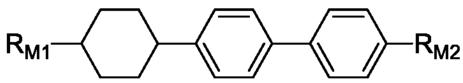 M-13;

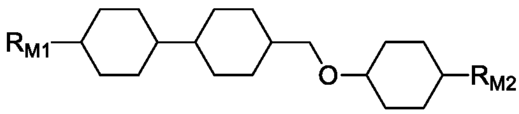 M-21;

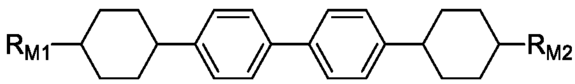 M-23;

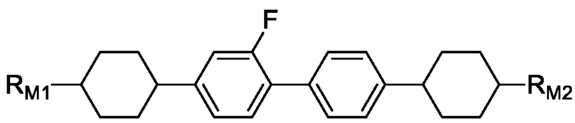 M-24;

and

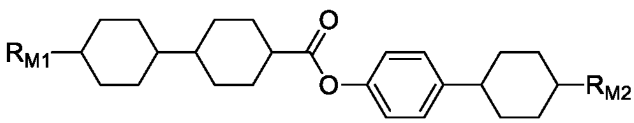 M-27;

preferably, in the liquid crystal composition, percentage by weight of the compound of general formula M is 0.1%-60%, further preferably, 30%-50%.

8. The liquid crystal composition according to claim 2, **characterized in that** the liquid crystal composition comprises at least two of the compound with the general formula I-1 and/or the compound of general formula I-9.

9. The liquid crystal composition according to claim 3, **characterized in that** the compound of general formula II comprises at least one compound selected from a group consisting of the compound of general formula II-1 and

general formula II-3 and at least one compound selected from a group consisting of the compound of general formula II-2 and general formula II-4.

**10.** A liquid crystal display device, **characterized in that** the liquid crystal display device comprises the liquid crystal composition of any one of claims 1-9.

# INTERNATIONAL SEARCH REPORT

International application No.
**PCT/CN2023/130203**

## A. CLASSIFICATION OF SUBJECT MATTER

C09K 19/42(2006.01)i; C09K 19/44(2006.01)i; G02F 1/13(2006.01)i; C09K 19/04(2006.01)i; C09K 19/00(2006.01)i

According to International Patent Classification (IPC) or to both national classification and IPC

## B. FIELDS SEARCHED

Minimum documentation searched (classification system followed by classification symbols)

C09K19/-; G02F1/-

Documentation searched other than minimum documentation to the extent that such documents are included in the fields searched

Electronic data base consulted during the international search (name of data base and, where practicable, search terms used)

CNABS, CNTXT, DWPI, VEN, VCN, ENTXTC, WPABSC, CNKI, WOTXT, ISI-WEB OF SCIENCE, STN, 万方, WANFANG: 江苏和成显示科技, 姚利芳, 丁文全, 贺笛, 王盼盼, 戴慧娟, 赵飞, 通式I, 通式II, 通式M, 二苯, 液晶, 光学各向异性, 清亮点, 转变温度, 介电常数, Kave, 平均弹性常数, 显示器, dibenzo, liquid crystal, display device, elastic constant, Transition temperature, Dielectric constant

## C. DOCUMENTS CONSIDERED TO BE RELEVANT

| Category* | Citation of document, with indication, where appropriate, of the relevant passages | Relevant to claim No. |
|---|---|---|
| A | CN 110300746 A (JNC CORP. et al.) 01 October 2019 (2019-10-01)<br>description, paragraphs [0014]-[0022] and [0094]-[0101] | 1-10 |
| A | CN 112724987 A (JIANGSU HECHENG DISPLAY TECHNOLOGY CO., LTD.) 30 April 2021 (2021-04-30)<br>claims 1-10 | 1-10 |
| A | CN 113845920 A (JIANGSU HECHENG DISPLAY TECHNOLOGY CO., LTD.) 28 December 2021 (2021-12-28)<br>claims 1-10 | 1-10 |
| A | EP 3839008 A1 (MERCK PATENT GMBH) 23 June 2021 (2021-06-23)<br>description, paragraph [0032] | 1-10 |
| A | JP 2021028299 A (JNC CORP. et al.) 25 February 2021 (2021-02-25)<br>claims 1-5 | 1-10 |

☐ Further documents are listed in the continuation of Box C.    ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **31 January 2024** | **19 February 2024** |
| Name and mailing address of the ISA/CN<br>**China National Intellectual Property Administration (ISA/CN)**<br>**China No. 6, Xitucheng Road, Jimenqiao, Haidian District, Beijing 100088** | Authorized officer<br><br>Telephone No. |

Form PCT/ISA/210 (second sheet) (July 2022)

**INTERNATIONAL SEARCH REPORT**
**Information on patent family members**

International application No.
**PCT/CN2023/130203**

| Patent document cited in search report | Publication date (day/month/year) | Patent family member(s) | Publication date (day/month/year) |
|---|---|---|---|
| CN 110300746 A | 01 October 2019 | TW 201837024 A | 16 October 2018 |
| | | TWI 744458 B | 01 November 2021 |
| | | EP 3594208 A1 | 15 January 2020 |
| | | EP 3594208 A4 | 02 September 2020 |
| | | JPWO 2018155340 A1 | 19 December 2019 |
| | | JP 7078030 B2 | 31 May 2022 |
| | | KR 20190124715 A | 05 November 2019 |
| | | WO 2018155340 A1 | 30 August 2018 |
| | | US 2020032143 A1 | 30 January 2020 |
| CN 112724987 A | 30 April 2021 | CN 112724987 B | 13 December 2022 |
| CN 113845920 A | 28 December 2021 | None | |
| EP 3839008 A1 | 23 June 2021 | TW 202128962 A | 01 August 2021 |
| | | KR 20210077615 A | 25 June 2021 |
| | | EP 3839008 B1 | 26 July 2023 |
| | | JP 2021105162 A | 26 July 2021 |
| | | US 2021179942 A1 | 17 June 2021 |
| JP 2021028299 A | 25 February 2021 | TW 201925435 A | 01 July 2019 |
| | | WO 2019107394 A1 | 06 June 2019 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- *Pure Appl. Chem.*, 2001, vol. 73 (5), 888
- **C. TSCHIERSKE** ; **G. PELZL** ; **S. DIELE**. *Angew. Chem.*, 2004, vol. 116, 6340-6368